# EUROPEAN PATENT SPECIFICATION

(11) **EP 4 518 402 B1**
(45) Date of publication and mention of the grant of the patent: **08.04.2026**
(21) Application number: 23799313.4
(22) Date of filing: 06.05.2023
(51) Int. Cl.: H04L 65/1016, H04L 65/1069, H04L 65/1073, H04L 65/1104, H04W 24/02

(54) **INFORMATION PROCESSING METHOD AND APPARATUS, COMMUNICATION DEVICE, AND STORAGE MEDIUM**
INFORMATIONSVERARBEITUNGSVERFAHREN UND -VORRICHTUNG, KOMMUNIKATIONSVORRICHTUNG UND SPEICHERMEDIUM
APPAREIL ET PROCÉDÉ DE TRAITEMENT D'INFORMATIONS, DISPOSITIF DE COMMUNICATION, ET SUPPORT DE STOCKAGE

(30) Priority: 06.05.2022 CN 202210489926
(43) Date of publication of application: 05.03.2025
(73) Proprietor: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: BAI, Xueqian, Beijing 100032 (CN); JIANG, Yi, Beijing 100032 (CN)
(74) Representative: J A Kemp LLP
(86) International application number: PCT/CN2023/092573
(87) International publication number: WO 2023/213327

(56) References cited:
- WO-A1-2022/067538
- CN-A- 107 666 543
- CN-A- 110 798 360
- CN-A- 112 566 072
- CN-A- 114 364 031
- US-A1- 2020 396 132
- "3rd Generation Partnership Project; Technical Specification Group Services and System Aspects; Study on system architecture enhancement for next generation real time communication; Phase 2 (Release 18)", 19 April 2022 (2022-04-19), XP052136809, Retrieved from the Internet <URL:https://ftp.3gpp.org/tsg_sa/WG2_Arch/Latest_SA2_Specs/Latest_draft_S2_Specs/23700-87-020.zip 23700-87-020-MCCclean.doc> [retrieved on 20220419]

## Description

### CROSS-REFERENCE TO RELATED APPLICATION

This application claims priority to Chinese Patent application No. 202210489926.6, filed on May 06, 2022.

### TECHNICAL FIELD

The disclosure relates to the technical field of communications, and relates to, but is not limited to, methods and apparatuses for processing information.

### BACKGROUND

A Data Channel (DC) is a new technology for a next-generation Internet Protocol Multimedia Subsystem (IMS, also known as an IP multimedia subsystem) network. However, in the related art, a success rate for establishing the DC is lower. When failing to establish the DC, it is necessary to re-establish the DC, which increases a communication delay.

US 2020/396132 A1 discloses a method at a first NF in a network system, which comprises: receiving intimacy information of a third NF from the third NF, or receiving intimacy information of a sub-instance of the third NF from the sub-instance of the third NF; and storing the received intimacy information in the first NF.

"3rd Generation Partnership Project; Technical Specification Group Services and System Aspects; Study on system architecture enhancement for next generation real time communication; Phase 2 (Release 18)", 3GPP DRAFT; 23700-87-020, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, 19 April 2022 (2022-04-19), XP052136809 discloses: IMS architecture enhancements to support new real time communication services based on requirements of e.g. eMMTEL and 5G_MEDIA_MTSI_ext.

### SUMMARY

In light of this, the disclosure provides methods and apparatuses for processing information, which are able to efficiently discover and select a DC network element that meets actual requirements, thereby improving the success rate for the DC and reducing the communication delay.

The features of the methods and apparatuses according to the present invention are defined in the independent claims, and the preferable features according to the present invention are defined in the dependent claims.

In an aspect of an embodiment of the disclosure, a method for processing information is provided as set forth in claim 1.

In an aspect of an embodiment of the disclosure, a method for processing information is provided as set forth in claim 8.

In an aspect of an embodiment of the disclosure, an apparatus for processing information is provided as set forth in claim 14.

In an aspect of an embodiment of the disclosure, an apparatus for processing information is provided as set forth in claim 15.

In the embodiments of the disclosure, the first network element sends the required DC media information and/or information related to the current call request to the second network element, and the second network element searches for the information related to the third network element or information related to the set of the third network elements that match these information based on the required DC media information and/or the information related to the current call request of the first network element, and returns the information to the first network element, so that the first network element establishes a DC based on the information related to the third network element or information related to the set of the third network elements. In this way, a more appropriate third network element, that is, the third network element matching the required DC media information and/or the information related to the current call request, can be obtained for the first network element, so that the success rate for establishing the DC can be improved and the communication delay can be reduced.

It should be understood that the above general description and the following detailed description are merely exemplary and explanatory, and are not intended to limit the disclosure.

### BRIEF DESCRIPTION OF THE DRAWINGS

The drawings herein are incorporated into the specification and constitute a part of the specification. The drawings illustrate embodiments consistent with the disclosure, and are used together with the specification to illustrate technical solutions of the disclosure. It is apparent that the drawings described below are only some embodiments of the disclosure, from which other drawings can be obtained without creative work by those of ordinary skill in the art.

The flowcharts shown in the drawings are merely illustrative and do not necessarily include all contents and operations/steps, nor do they need to be performed in the described order. For example, some operations/steps may further be decomposed, while some operations/steps may be combined or partially combined, so the actual execution order may be changed according to the actual situation.
FIG. 1 is a flowchart illustrating a method for processing information according to an embodiment of the disclosure.
FIG. 2 is a flowchart illustrating another method for processing information according to an embodiment not being part of the disclosure.
FIG. 3 is a flowchart illustrating still another method for processing information according to an embodiment of the disclosure.
FIG. 4 is a flowchart illustrating yet another method for processing information according to an embodiment not being part of the disclosure.
FIG. 5 is a schematic diagram illustrating a DC architecture according to an embodiment of the disclosure.
FIG. 6 is a schematic diagram illustrating an IMS network architecture according to an embodiment of the disclosure.
FIG. 7 is a flowchart illustrating a method for processing information according to an embodiment of the disclosure.
FIG. 8A is a flowchart illustrating a method for processing information according to an embodiment of the disclosure.
FIG. 8B is a flowchart illustrating a method for processing information according to an embodiment of the disclosure.
FIG. 9 is a flowchart illustrating a method for processing information according to an embodiment not being part of the disclosure.
FIG. 10A is a flowchart illustrating a method for processing information according to an embodiment not being part of the disclosure.
FIG. 10B is a flowchart illustrating a method for processing information according to an embodiment not being part of the disclosure.
FIG. 11 is a flowchart illustrating a method for processing information according to an embodiment of the disclosure.
FIG. 12 is a flowchart illustrating a method for processing information according to an embodiment of the disclosure.
FIG. 13 is a flowchart illustrating a method for processing information according to an embodiment not being part of the disclosure.
FIG. 14 is a flowchart illustrating a yet another method for processing information according to an embodiment not being part of the disclosure.
FIG. 15 is a schematic diagram illustrating a structure of an apparatus 15 for processing information according to an embodiment of the disclosure.
FIG. 16 is a schematic diagram illustrating a structure of an apparatus 16 for processing information according to the disclosure.
FIG. 17 is a schematic diagram illustrating a structure of an apparatus 17 for processing information according to an embodiment of the disclosure.
FIG. 18 is a schematic diagram illustrating a structure of an apparatus 18 for processing information according to the disclosure.
FIG. 19 is a schematic diagram illustrating a structure of an apparatus 19 for processing information according to the disclosure.
FIG. 20 is a schematic diagram illustrating a structure of an apparatus 20 for processing information according to the disclosure.
FIG. 21 is a schematic diagram illustrating a structure of an apparatus 21 for processing information according to the disclosure.
FIG. 22 is a schematic diagram illustrating a structure of an apparatus 22 for processing information according to the disclosure.
FIG. 23 is a schematic diagram illustrating a structure of a communication device 230 according to the disclosure.

### DETAILED DESCRIPTION

In order to make purposes, technical solutions, and advantages of the embodiments of the disclosure clearer, the specific technical solutions of the disclosure will be described in further detail below with reference to the drawings in the embodiments of the disclosure. The following embodiments are used for illustrating the disclosure, but are not intended to limit the scope of the disclosure.

All technical and scientific terms used herein have the same meanings as that commonly understood by those skilled in the art of the disclosure, unless otherwise defined. The terms used herein are intended only to describe the embodiments of the disclosure and are not intended to limit the disclosure.

In the following description, the expression "some embodiments" is involved to describe a subset of all possible embodiments. However, it is understood that "some embodiments" may be a same subset or different subsets of all possible embodiments and may be combined with each other without conflict.

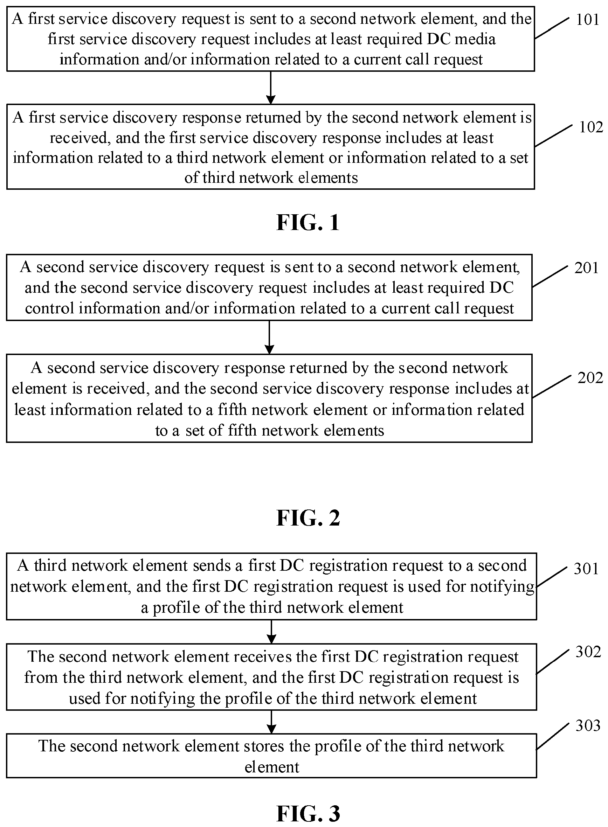

An embodiment of the disclosure provides a method for processing information. FIG. 1 is a flowchart illustrating a method for processing information according to an embodiment of the disclosure. As illustrated in FIG. 1, the method includes the following operation 101 to operation 102.

At operation 101, a first network element sends a first service discovery request to a second network element. The first service discovery request includes at least required DC media information and/or information related to a current call request.

At operation 102, the first network element receives a first service discovery response returned by the second network element. The first service discovery response includes at least information related to a third network element or information related to a set of third network elements.

In the embodiment of the disclosure, the first network element sends the required DC media information and/or information related to the current call request to the second network element, the second network element searches for the information related to the third network element or the information related to the set of the third network elements that match these information based on the required DC media information and/or the information related to the current call request of the first network element, and the second network element returns the information to the first network element, so that the first network element establishes a DC based on the information related to the third network element or information related to the set of the third network elements. In this way, a more appropriate third network element, that is, the third network element matching the required DC media information and/or the information related to the current call request, can be obtained for the first network element, so that the success rate for establishing the DC can be improved and the communication delay can be reduced.

In some embodiments, the first service discovery request is one of: a DC media capability discovery request, a DC media discovery request, a DC media service capability discovery request, a DC media service discovery request, a DC service capability discovery request, a DC service discovery request, or a DC network function discovery request (i.e., Nnrf_NFDiscovery_Request). The name of the first service discovery request is not limited in the embodiments, and the above names may be equivalent or interchangeable unless otherwise specified.

In some embodiments, the required DC media information includes at least one of: a DC media capability, a DC media, a DC media service capability, a DC media service, a DC service capability, a DC service, a DC network function, a DC capability, an interface capability, a DC media capability list, a DC media list, a DC media service capability list, a DC media service list, a DC service capability list, a DC service list, a DC network function list, a DC capability list, or an interface capability list. The content of the required DC media information and the above names of the content included in the required DC media information are not limited in the embodiments.

The information related to the current call request indicates that the current call is sent by a first terminal. In some embodiments, the information related to the current call request includes calling information and/or called information. Illustratively, the calling information includes a calling number and the called information includes a called number.

In some embodiments, the first service discovery response carries the information related to the third network element or the information related to the set of the third network elements.

Optionally, when the first service discovery response includes information related to a third network element, the first network element directly uses the third network element as a target network element and establishes a connection with this third network element.

In an embodiment, when the first service discovery response includes information related to multiple third network elements (i.e., the information related to the set of the third network elements), the first network element selects the third network element based on at least one of: DC media requirement information, interface requirement information, the information related to the current call request, location information of a first terminal, Internet Protocol (IP) address information of the first terminal, or information of a selected media function. In an embodiment not being part of the disclosure, the first network element selects the third network element based on the information related to the set of the third network elements. "Selecting the third network element" may also be referred to as "determining the third network element", that is, "selecting the third network element" is equivalent to "determining the third network element", and both are for selecting the third network element that matches the above information.

In the embodiment, the third network element is discovered and selected based on the location information of the first terminal and/or DC media capability information (i.e., the required DC media information) and the like, so as to optimize the selection of the third network element to obtain the third network element that meets the actual requirements, thereby improving the success rate for the DC or media negotiation, and thus reducing the communication delay. In other words, a network may efficiently call the third network element on demand, thereby improving the success rate for DC media negotiation, reducing the delay for DC media establishment, and enabling an IMS network to support more diverse multimedia or interactive services.

It can be understood that, there may be network elements in the set of the third network elements that do not exactly match the required DC media information and/or the information related to the current call request. Therefore, in order to obtain a more appropriate third network element, the first network element may select the third network element that matches the DC media requirement information and/or the interface requirement information from the set of the third network elements based on these requirements, and establish the connection based on this.

The first terminal is not limited in the embodiments of the disclosure, and may be a calling terminal, a called terminal, or another terminal, which is not limited in the embodiment.

It can be understood that the first network element may select the third network element based at least on the location information of the first terminal, so that the selected third network element is closer to the location of the first terminal, thereby enabling the first network element to establish the connection with the third network element that is closer to the first network element. In this way, a path for forwarding a message can be shorten, thereby reducing the communication delay.

It should also be noted that the selected media function may also be referred to as a selected media network element, a selected media network function, etc. The name of the media function is not limited in the embodiment, and the above message names may be equivalent or interchangeable unless otherwise specified.

In some embodiments, the selected media function includes at least one of: an IP Multimedia Subsystem-Access Gateway (IMS-AGW), a Media Resource Function Processor (MRFP), an IP Multimedia Media Gateway (IM-MGw), a Transition Gateway (TrGW), a User Plane Function (UPF), other IMS media functions, or other fifth Generation Mobile Communication Technology Core Network (5GC) media functions. The other IMS media functions or the other 5GC media functions refer to IMS media functions or 5GC media functions that are different from the IMS-AGW, the MRFP, the IM-MGw, the TrGW, and the UPF.

In some embodiments, the first network element may be one of: an Application Server (AS), a Data Channel Control Functionality (DCSF), or an IMS network element, etc. The name of the first network element is not limited in the embodiment, in short, the first network element belongs to a network function consumer (i.e., NF Consumer).

In the embodiment, the AS is equivalent to an IMS-AS, a Multi Media Telephony (MMTel) AS, an application server, or the like. The name of the AS is not limited in the embodiment.

In the embodiment, the DCSF is equivalent to a DC Server (DCS), a DC Server-Controller (DCS-C), a DC Control Function (DCCF), a Unified Control Function (UCF), a Centralized Control Function (CCF) or a DC Signaling Function (DCSF), etc. The name of the DCSF is not limited in the embodiment.

In some embodiments, the second network element may be a Network Repository Function (NRF) or other network devices. The name of the second network element is not limited in the embodiment. Accordingly, at operation 101, the first network element sends the first service discovery request to the second network element, and the first service discovery request includes at least the required DC media information and/or the information related to the current call request, which may be described as: "IMS AS sends Nnrf_NFDiscovery_Request to NRF, with the required data channel media services related information".

In some embodiments, the third network element may be one of: a DC Media Functionality (DCMF), a DC media function, a DC network function instance, a DC media network function instance, a DC service, a DC media service, a DC Media (DCM), a DC Server-User (DCS-U), a DC Server-Media (DCS-M), a DC Media Function (DMF), a Media Resource Function (MRF), a Media Resource Function Processor (MRFP), a Unified Media Function (UMF) or a Centralized Media Function (CMF), etc. That is, the name of the third network element is not limited in the embodiment. The above names of the third network element may be equivalent or interchangeable unless otherwise specified.

In the embodiment, the DC Media Functionality (DCMF) is equivalent to a DC Media Function (DCMF) or a DC server-user plane (DCS-U) and so on. The name of DCMF is not limited in this embodiment.

In some embodiments, the information related to the third network element and/or the information related to the set of the third network elements includes at least one of: an identification, address information, DC network function type information, service instance list information, DC media function instance information, a DC media network function, or other information related to a DC media service or capability. That is, the information related to the third network element may include at least one of the above pieces of information, the information related to the set of the third network elements includes information related to each third network element in the set, and the information related to each third network element may include at least one of the above pieces of information.

In some embodiments, when previously determined information related to the third network element or information related to the set of the third network elements is absent in a cache, or when a cache duration of the previously determined information related to the third network element or information related to the set of the third network elements is greater than a duration threshold, the first service discovery request is sent to the second network element.

When the previously determined information related to the third network element or information related to the set of the third network elements is present in the cache, or when the cache duration is less than or equal to the duration threshold, the previously determined information related to the third network element or information related to the set of the third network elements will be used.

It can be understood that when the previously determined information related to the third network element or information related to the set of the third network elements is present in the cache, or when the cache duration is less than or equal to the duration threshold, the first network element may directly select or determine the third network element based on the previously determined information related to the third network element or information related to the set of the third network elements without initiating the first service discovery request. In this way, the time for selecting the third network element is saved, so that the connection with the third network element can be quickly established, and the communication delay can be reduced.

In some embodiments, when obtaining an interface capability and/or an interface capability list of the third network element or the set of the third network elements, a connection establishment method is selected based on a local policy.

In some embodiments, the interface capability or the interface capability list may be information indicating support for one or more interface protocols, for example, it records information indicating support for a first interface protocol and/or a second interface protocol.

Further, in some embodiments, when obtaining the interface protocol supported by the third network element or the respective interface protocol supported by each network element in the set of the third network elements, the first network element may select an interface protocol that more effectively reduces the communication delay as the connection establishment method, and establish a connection with the corresponding third network element.

Illustratively, the first interface protocol may be a Service-Based Interface (SBI) protocol and the second interface protocol may be an H.248 protocol.

Accordingly, if the third network element supports the SBI protocol, or supports both the SBI and the H.248 protocols, the connection establishment method selected by the first network element based on the local policy may be the SBI. Thus, compared to the H.248 protocol, the SBI does not require static configuration of the connection between the network element and the media network element, and is beneficial for capacity expansion and decoupling from different manufacturers. Therefore, the SBI protocol, instead of the H.248 protocol, is selected to establish the connection with the third network element, which improves the convenience of establishing the connection with the third network element.

The interface capability and the interface capability list may also be referred to as interface information, etc., and the names of the interface capability and the interface capability list are not limited.

In some embodiments, when knowing that the third network element supports a first interface protocol and a second interface protocol, the first network element establishes a connection with the third network element based on the first interface protocol. When failing to establish the connection with the third network element based on the first interface protocol, the first network element establishes the connection with the third network element based on the second interface protocol. A communication performance of the connection establishment method supported by the first interface protocol is better than that of the connection establishment method supported by the second interface protocol.

It can be understood that the first network element firstly establishes the connection with the third network element based on the first interface protocol, and then attempts to establish the connection with the third network element based on the second interface protocol if the connection based on the first interface protocol fails. In this way, the success rate for establishing the connection with the third network element is improved while ensuring the communication delay, thereby further reducing the communication delay.

In the above embodiments, a diversity interface selection mechanism is provided to meet a compatibility requirement of the network for the H.248/SBI.

Based on the above embodiments, the interaction process between the first network element and the second network element includes following operations. The first network element sends a first service discovery request to the second network element. The second network element receives the first service discovery request from the first network element. The first service discovery request includes at least required DC media information and/or information related to a current call request. The second network element determines information related to a third network element or information related to a set of third network elements. The second network element sends a first service discovery response to the first network element. The first service discovery response includes at least the information related to the third network element or the information related to the set of the third network elements. The first network element receives the first service discovery response returned by the second network element.

In some embodiments, the first service discovery response further includes interface information of the third network element or the set of the third network elements, and the interface information includes an interface capability and/or an interface capability list.

In the embodiment, regardless of whether the required DC media information includes an interface capability requirement, that is, regardless of whether the first network element requests to obtain the interface capability (or the interface capability list) of the third network element, the second network element returns the interface information supported by the third network element to the first network element. In this way, it is convenient for the first network element to select an appropriate interface to establish the connection with the third network element based on the interface capability or the interface capability list of the third network element.

Illustratively, when obtaining the interface capability and/or the interface capability list of the third network element or the set of the third network elements, the first network element selects a connection establishment method based on a local policy, and establishes the connection with the selected third network element based on the connection establishment method.

Illustratively, when knowing that the third network element supports a first interface protocol and a second interface protocol, the first network element establishes a connection with the third network element based on the first interface protocol. When failing to establish the connection with the third network element based on the first interface protocol, the first network element establishes the connection with the third network element based on the second interface protocol.

In some embodiments, the second network element determines the information related to the set of the third network elements, which includes the following operations. A set of third network elements that satisfy the required DC media information and/or the information related to the current call request is determined. The information related to the set of the third network elements is determined.

In some embodiments, the second network element determines the information related to the third network element, which includes the following operations. A third network element that satisfies the required DC media information and/or the information related to the current call request is determined based on a local policy. The information related to the third network element is determined. That is, the second network element directly selects a third network element locally based on the required DC media information and/or the information related to the current call request, and returns the information related to the third network element to the first network element. In this way, the first network element does not need to select one from multiple third network elements, but directly establishes a connection with a third network element based on the information related to the third network element returned by the second network element.

In some embodiments, the second network element may determine the information related to the third network element or the information related to the set of the third network elements based on an attribution of the calling number, for example, a third network element closer to the attribution of the calling number is preferentially taken as the third network element. Optionally, multiple third network elements closer to the attribution of the calling number are preferentially taken as the set of the third network elements. Optionally, a third network element at the attribution of the calling number is preferentially taken as the third network element. Optionally, multiple third network elements at the attribution of the calling number are preferentially taken as the set of the third network elements.

In some embodiments, the NRF sends at least one DCMF instance information to the IMS AS, and if multiple DCMF instances are received, the IMS AS may select a DCMF Network Function (NF) based on the local policy (i.e., NRF sends the DCMF instance(s) information to IMS AS. In case of multiple DCMF instances are received, the IMS AS will perform DCMF NF selection based on the local policy).

In some embodiments, the NRF may determine a set of NF instances that match Nnrf_NFDiscovery_Request and internal policies of the NRF, and sends NF profiles of the determined NF instances. Each NF profile contains at least output required parameters to a NF service consumer via an Nnrf_NFDiscovery_Request Response message (i.e., if allowed, the NRF determines a set of NF instance(s) matching the Nnrf_NFDiscovery _Request and internal policies of the NRF and sends the NF profile(s) of the determined NF instances. Each NF profile containing at least the output required parameters to the NF service consumer via Nnrf_NFDiscovery _Request Response message).

An embodiment not being part of the disclosure provides a method for processing information. FIG. 2 is a flowchart illustrating a method for processing information according to the disclosure. As illustrated in FIG. 2, the method includes the following operation 201 to operation 202.

At operation 201, a fourth network element sends a second service discovery request to a second network element. The second service discovery request includes at least required DC control information and/or information related to a current call request.

At operation 202, the fourth network element receives a second service discovery response returned by the second network element. The second service discovery response includes at least information related to a fifth network element or information related to a set of fifth network elements.

In the disclosure, the fourth network element sends the required DC control information and/or information related to the current call request to the second network element, the second network element searches for the information related to the fifth network element or the information related to the set of the fifth network elements that match these information based on the required DC control information and/or the information related to the current call request of the fourth network element, and the second network element returns the information to the fourth network element, so that the fourth network element establishes a DC based on the information related to the fifth network element or information related to the set of the fifth network elements. In this way, a more appropriate fifth network element, that is, the fifth network element matching the required DC control information and/or the information related to the current call request, can be obtained for the fourth network element, so that the success rate for establishing the DC can be improved and the communication delay can be reduced.

The information related to the fifth network element or the information related to the set of the fifth network elements includes at least one of: an identification, address information, DC network function type information, service instance list information, DC control function instance information, a DC control network function, or other information related to a DC control service or capability.

The second service discovery request is one of: a DC control capability discovery request, a DC control discovery request, a DC control service capability discovery request, a DC control service discovery request, a DC service capability discovery request, a DC service discovery request, or a DC network function discovery request (i.e., Nnrf_NFDiscovery _Request). The name of the second service discovery request is not limited in the disclosure, and the above names may be equivalent or interchangeable unless otherwise specified.

The required DC control information includes at least one of: a DC control capability, a DC control, a DC control service capability, a DC control service, a DC service capability, a DC service, a DC network function, a DC capability, a DC control capability list, a DC control list, a DC control service capability list, a DC control service list, a DC service capability list, a DC service list, a DC network function list, or a DC capability list. The content of the required DC control information and the names of the above content included in the required DC control information are not limited in the embodiments.

The information related to the current call request includes calling information and/or called information. Illustratively, the calling information includes a calling number and the called information includes a called number.

The second service discovery response carries the information related to the fifth network element or the information related to the set of the fifth network elements.

Optionally, when the second service discovery response includes the information related to the fifth network element, the fourth network element directly determines the fifth network element as a target network element and establishes a connection with this fifth network element.

Optionally, when the second service discovery response includes information related to multiple fifth network elements (i.e. the information related to the set of the fifth network elements), the fourth network element may select the fifth network element based on at least one of: the information related to the set of the fifth network elements, DC control requirement information, interface requirement information, the information related to the current call request, location information of a first terminal, IP address information of the first terminal, or information related to a selected IMS control function and/or control network element. "Selecting the fifth network element" may also be referred to as "determining the fifth network element", that is, "selecting the fifth network element" is equivalent to "determining the fifth network element", and both are for selecting the fifth network element that matches the above information.

The discovery and selection of the fifth network element are achieved based on the location information of the first terminal and/or DC control capability information (i.e., the required DC control information), to optimize the selection of the fifth network element and obtain the fifth network element that meets the actual requirements, thereby improving the success rate for the DC or the control negotiation, and thus reducing the communication delay. In other words, a network can efficiently call the fifth network element on demand, thereby improving the success rate for DC control negotiation, reducing the delay for establishing the DC control, and enabling an IMS network to support more diverse multimedia or interactive services.

It can be understood that there may be network elements in the set of the fifth network elements that do not exactly match the required DC control information and/or the information related to the current call request. Therefore, in order to obtain a more appropriate fifth network element, the fourth network element may select the fifth network element that matches the DC control requirement information and/or the interface requirement information from the set of the fifth network elements based on these requirements, and establish the connection based on this.

The first terminal is not limited in the disclosure, and may be a calling terminal, a called terminal, or another terminal, which is not limited in the disclosure.

It can be understood that the fourth network element may select the fifth network element based at least on the location information of the first terminal, so that the selected fifth network element is closer to the location of the first terminal, thereby enabling the fourth network element to establish the connection with the fifth network element that is closer to the fourth network element. In this way, a path for forwarding a message can be shorten, thereby reducing the communication delay.

The selected IMS control function and/or control network element includes at least one of: an AS, a Proxy-Call Session Control Function (P-CSCF), or other IMS control functions. The other IMS control functions refer to control functions different from the P-CSCF and the AS.

The fifth network element may be one of: a DC Signaling Function (DCSF), a DC control function, a DC network function instance, a DC control network function instance, a DC service, a DC control service and the like. The name of the fifth network element is not limited in this disclosure. The above names of the fifth network element may be equivalent or interchangeable unless otherwise specified.

The fourth network element may be an AS or an IMS network element, etc. The name of the fourth network element is not limited in the disclosure, in short, the fourth network element belongs to a network function consumer (i.e., NF Consumer). It is noted that when the first network element is the AS and the fourth network element is the AS, the first network element and the fourth network element are the same network element. When the first network element is the IMS network element and the fourth network element is the IMS network element, the first network element and the fourth network element are the same network element. When the first network element and the fourth network element are different network elements, the fourth network element is the AS or the IMS network element, and the first network element is the selected fifth network element (i.e. DCSF).

The second service discovery response carries the information related to the fifth network element or the information related to the set of the fifth network elements.

When previously determined information related to the fifth network element or information related to the set of the fifth network elements is absent in a cache, or when a cache duration of the previously determined information related to the fifth network element or information related to the set of the fifth network elements is greater than a duration threshold, the second service discovery request is sent to the second network element. When the previously determined information related to the fifth network element or information related to the set of the fifth network elements is present in the cache, or when the cache duration is less than or equal to the duration threshold, the previously determined information related to the fifth network element or information related to the set of the fifth network elements will be used.

It can be understood that when the previously determined information related to the fifth network element or information related to the set of the fifth network elements is present in the cache, or when the cache duration is less than or equal to the duration threshold, the fourth network element may directly select or determine the fifth network element based on the previously determined information related to the fifth network element or information related to the set of the fifth network elements without initiating the first service discovery request. In this way, the time for selecting the fifth network element is saved, so that the connection with the fifth network element can be quickly established, and the communication delay can be reduced.

The second service discovery response further includes interface information of the fifth network element or the set of the fifth network elements, and the interface information includes an interface capability and/or an interface capability list.

When obtaining the interface capability and/or the interface capability list of the fifth network element or the set of the fifth network elements, the fourth network element selects a connection establishment method based on a local policy.

The interface capability or the interface capability list may be information indicating support for one or more interface protocols, for example, it records information indicating support for a first interface protocol and/or a second interface protocol.

Further, when obtaining the interface protocol supported by the fifth network element or the respective interface protocol supported by each network element in the set of the fifth network elements, the fourth network element may select an interface protocol that more effectively reduces the communication delay as the connection establishment method, and establish the connection with the corresponding fifth network element.

Illustratively, the first interface protocol may be an SBI protocol and the second interface protocol may be an H.248 protocol.

Accordingly, if the fifth network element supports the SBI, or supports both the SBI and the H.248 protocol, the connection establishment method selected by the fourth network element based on the local policy may be the SBI. Compared to the H.248 protocol, the SBI does not require static configuration of the connection between the network element and the media network element, and is beneficial to capacity expansion and decoupling from different manufacturers. Therefore, the SBI protocol, instead of the H.248 protocol, is selected to establish the connection with the fifth network element, which improves the convenience of establishing the connection with the fifth network element.

The interface capability and the interface capability list may also be referred to as interface information, etc., and the names of the interface capability and the interface capability list are not limited.

When knowing that the fifth network element supports a first interface protocol and a second interface protocol, the fourth network element establishes a connection with the fifth network element based on the first interface protocol. When failing to establish the connection with the fifth network element based on the first interface protocol, the fourth network element establishes the connection with the fifth network element based on the second interface protocol. The communication performance of the connection establishment method supported by the first interface protocol is better than that of the connection establishment method supported by the second interface protocol.

It can be understood that the fourth network element firstly establishes the connection with the fifth network element based on the first interface protocol, and then attempts to establish the connection with the fifth network element based on the second interface protocol if the connection based on the first interface protocol fails. In this way, the success rate for establishing the connection with the fifth network element is improved while ensuring the communication delay, thereby further reducing the communication delay.

Based on the above disclosure, the interaction process between the fourth network element and the second network element includes the following operations. The fourth network element sends a second service discovery request to the second network element. The second network element receives the second service discovery request from the fourth network element. The second service discovery request includes at least required DC control information and/or information related to a current call request. The second network element determines information related to a fifth network element or information related to a set of fifth network elements. The second network element sends a second service discovery response to the fourth network element. The second service discovery response includes at least the information related to the fifth network element or the information related to the set of the fifth network elements. The fourth network element receives the second service discovery response.

The second service discovery response further includes interface information of the fifth network element or the set of the fifth network elements, and the interface information includes an interface capability and/or an interface capability list.

Regardless of whether the required DC control information includes an interface capability requirement, that is, regardless of whether the fourth network element requests to obtain the interface capability (or the interface capability list) of the fifth network element, the second network element returns the interface information supported by the fifth network element to the fourth network element. In this way, it is convenient for the fourth network element to select an appropriate interface to establish the connection with the fifth network element based on the interface capability or the interface capability list of the fifth network element.

Illustratively, when obtaining the interface capability and/or the interface capability list of the fifth network element or the set of the fifth network elements, the fourth network element selects a connection establishment method based on a local policy, and establishes the connection with the selected fifth network element based on the connection establishment method.

Illustratively, when knowing that the fifth network element supports a first interface protocol and a second interface protocol, the fourth network element establishes a connection with the fifth network element based on the first interface protocol. When failing to establish the connection with the fifth network element based on the first interface protocol, the fourth network element establishes the connection with the fifth network element based on the second interface protocol.

The second network element determines the information related to the fifth network element, which includes the following operations. A fifth network element or a set of fifth network elements that satisfy the required DC control information and/or the information related to the current call request is determined based on a local policy. The information related to the fifth network element is determined. That is, the second network element directly selects a fifth network element locally based on the required DC control information and/or the information related to the current call request, and returns the information related to the fifth network element to the fourth network element. In this way, the fourth network element does not need to select one from many fifth network elements, but can directly establish the connection with the fifth network element based on the information related to the fifth network element returned by the second network element.

The second network element determines the information related to the set of the fifth network elements, which includes the following operations. A set of fifth network elements that satisfy the required DC control information and/or the information related to the current call request is determined. The information related to the set of the fifth network elements is determined.

The information related to the current call request includes calling information and/or called information. Illustratively, the calling information includes a calling number and the called information includes a called number.

The second network element may determine the information related to the fifth network element or the information related to the set of the fifth network elements based on an attribution of the calling number, for example, a fifth network element closer to the attribution of the calling number is preferentially taken as the fifth network element. Optionally, multiple fifth network elements closer to the attribution of the calling number are preferentially taken as the set of the fifth network elements. Optionally, a fifth network element at the attribution of the calling number is preferentially taken as the fifth network element. Optionally, multiple fifth network elements at the attribution of the calling number are preferentially taken as the set of the fifth network elements.

In the disclosure, a registration process for the DCMF or the DCSF needs to be performed firstly before the service discovery or selection process. That is, a profile of at least one third network element needs to be stored in the second network element before the discovery and/or selection of the third network element is performed, i.e., the at least one third network element has been registered on the second network element. The same process applies to the discovery and/or the selection of the fifth network element, provided that at least one fifth network element has been registered on the second network element.

An embodiment of the disclosure provides a method for processing information. FIG. 3 is a flowchart illustrating the method for processing information according to the embodiment of the disclosure. As illustrated in FIG. 3, the method includes the following operation 301 to operation 303.

At operation 301, a third network element sends a first DC registration request to a second network element. The first DC registration request is used for notifying a profile of the third network element.

The name of the profile is not limited in the embodiment, and the profile may be equivalent to an NF profile, configuration information, or the like.

At operation 302, the second network element receives the first DC registration request from the third network element. The first DC registration request is used for notifying the profile of the third network element.

At operation 303, the second network element stores the profile of the third network element (i.e., store the NF Profile).

In the embodiment, the registration of the third network element is implemented, thereby providing the profile for the discovery or selection of the third network element in the network.

In some embodiments, the first DC registration request may be one of: a DC media capability, a DC network function, a DC media network function, a DC media capability registration request (i.e., Nnrf_NFManagement_NFRegister Request), a DC request, a DC media registration request, etc. The name of the first DC registration request is not limited in the embodiment, and the above names of the first DC registration request may be equivalent or interchangeable unless otherwise specified.

The profile of the third network element refers to related profile supported by the third network element. In some embodiments, the profile of the third network element includes at least one of: a network function type (i.e., nfType), an identification, an address, a DC media capability (i.e., Ndcmf_DCMediaCapability), a DC media (i.e., Ndcmf_DCMedia), a DC media service capability (i.e., Ndcmf_DCMediaServiceCapability), a DC media service (i.e., Ndcmf_DCMediaService), a DC service capability (i.e., Ndcmf_DCServiceCapability), a DC service (i.e., Ndcsf_DCService), a DC network function (i.e., Ndcsf_DCnf), a DC capability (i.e., Ndcmf_DCCapability), a DC interface capability, a DC media capability list (i.e., Ndcmf_DCMediaCapabilityList), a DC media list (i.e., Ndcmf_DCMediaList), a DC media service capability list (i.e., Ndcmf_DCMediaServiceCapabilityList), a DC media service list (i.e., Ndcmf_DCMediaServiceList), a DC service capability list (i.e., Ndcmf_DCServiceCapabilityList), a DC service list (i.e., Ndcsf_DCServiceList), a DC network function list (i.e., Ndcsf_DCnfList), a DC capability list (i.e., DCCapabilityList), or a DC interface capability list.

In some embodiments, the profile of the third network element includes at least one of: an immersive calling (e.g., Augmented Reality, AR), a translation, a screen sharing, an image rendering, a DC interface capability, or a DC interface capability list.

The content of the profile of the third network element and the above names of the content included in the profile of the third network element are not limited in the embodiment.

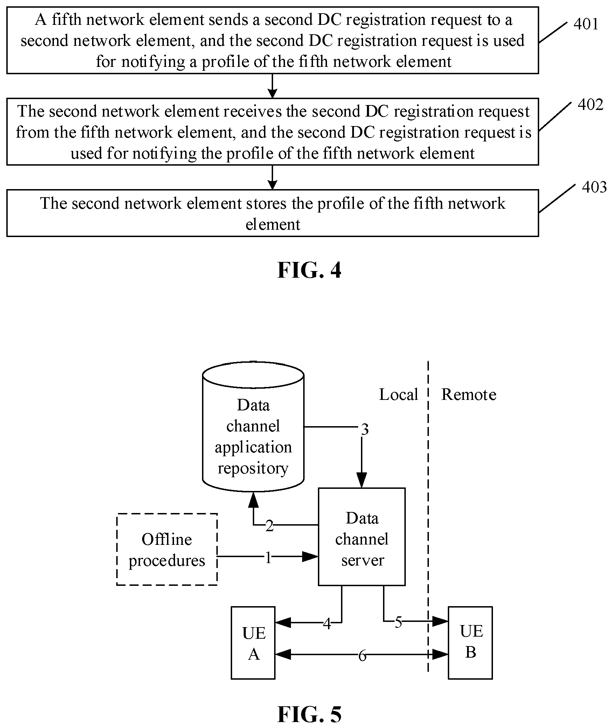

An embodiment not being part of the disclosure provides a method for processing information. FIG. 4 is a flowchart illustrating the method for processing information according to the disclosure. As illustrated in FIG. 4, the method includes the following operation 401 to operation 403.

At operation 401, a fifth network element sends a second DC registration request to a second network element. The second DC registration request is used for notifying a profile of the fifth network element.

At operation 402, the second network element receives the second DC registration request from the fifth network element. The second DC registration request is used for notifying the profile of the fifth network element.

At operation 403, the second network element stores the profile of the fifth network element (i.e., store NF Profile).

The registration of the fifth network element is implemented, thereby providing the configuration information for the discovery or selection of the fifth network element in the network.

The second DC registration request may be one of: a DC control capability, a DC network function, a DC control network function, a DC control capability registration request (i.e., Nnrf_NFManagement_NFRegister Request), a DC request, a DC control registration request, etc. The name of the second DC registration request is not limited in the disclosure, and the above names of the second DC registration request may be equivalent or interchangeable unless otherwise specified.

The profile of the fifth network element refers to related configuration information supported by the fifth network element. The profile of the fifth network element includes at least one of: a network function type (i.e., nfType), an identification, an address, a DC control capability (i.e., Ndcmf_DCControlCapability), a DC control (i.e., Ndcmf_DCControl), a DC control service capability (i.e., Ndcmf_DCControlServiceCapability), a DC control service (i.e., Ndemf_DCControlService), a DC service capability (i.e., Ndcmf_DCServiceCapability), a DC service (i.e., Ndcsf_DCService), a DC network function (i.e., Ndcsf_DCnf), a DC capability (i.e., Ndcmf_DCCapability), a DC control capability list (i.e., Ndcmf_DCControlCapability List), a DC control list (i.e., Ndcmf_DCControlList), a DC control service capability list (i.e., Ndcmf_DCControlServiceCapabilityList), a DC control service list (i.e., Ndcmf_DCControlServiceList), a DC service capability list, a DC service list, a DC network function list, or a DC capability list.

The profile of the fifth network element includes at least one of: a bootstrap DC capability, an application DC capability, an immersive calling (e.g., Augmented Reality, AR), a translation, a screen sharing, an image rendering, an interactive menu, a multimedia incoming display, a simultaneous interpretation, a DC interface capability, or a DC interface capability list.

The content of the profile of the fifth network element and the above names of the content included in the profile of the fifth network element are not limited in the disclosure.

The DC is a new technology for a next-generation IMS network. FIG. 5 is a schematic diagram illustrating a DC architecture according to an embodiment of the disclosure. In some embodiments, only a DC server functionality, a DC Application Repository (DCAR), and a conceptual process of their interaction with User Equipment (UE) are defined for the DC network function. The process may include the following operation 501 to operation 506.

At operation 501, a data channel-related application is uploaded to a network side by an authorized party through the UE. The UE may also be described as a terminal, a user, or the like.

At operation 502, the data channel-related application is stored in the DCAR.

At operation 503, the data channel-related application is downloaded from the DCAR during a call process.

At operation 504, the data channel-related application is sent to a local UE through a bootstrap data channel.

At operation 505, the data channel-related application is sent to a remote UE through the bootstrap data channel.

At operation 506, other data channels used by the data channel-related application may be established between the local UE and the remote UE.

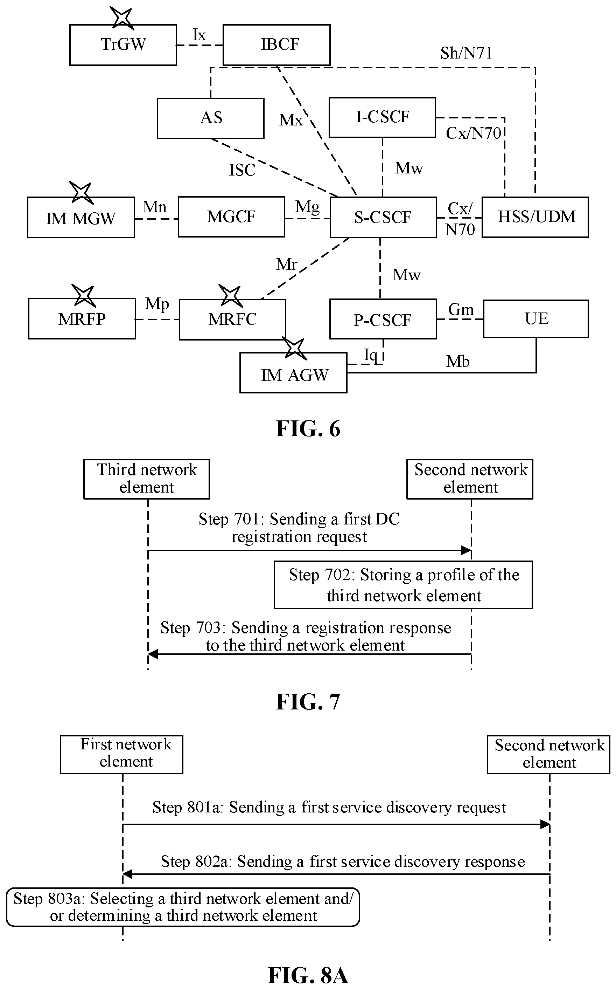

FIG. 6 is a schematic diagram illustrating an IMS network architecture according to an embodiment of the disclosure. In some embodiments, media network interfaces defined by the IMS network are all based on the H.248 protocol or a Media Gateway Control Protocol (i.e., Megaco protocol). The DCMF needs to have a new DC media capability and a more flexible selection mechanism, while the H.248 protocol cannot meet the flexibility required for the DC media.

In some embodiments, the IMS technologies and standards (e.g., 3GPP TS 23.228, 3GPP TS 26.114) have not yet defined processes and mechanisms for an interface for the DC to interact with the IMS network, an interaction process, and how to register, discover or select the DCSF and the DCMF.

In some embodiments, the IMS network adopts the H.248/Megaco protocol for selecting the media network function, and the data channel media network needs to support more new media functions (e.g., rendering, translation, etc.). A traditional IMS network protocol is not able to satisfy the expansion of new media capabilities of the DC very well, and it is necessary to innovate an SBI service-oriented design for the DCMF and network functions calling this DCMF.

In some embodiments, the IMS network is routed using a standard Session Initiation Protocol (SIP) and/or an IMS Service Control (ISC) triggering mechanism. The routing mechanism is not applicable to nodes that are not necessarily involved during the registration, and its serial triggering characteristic leads to coupling, which makes it impossible for the IMS network to efficiently/on demand call the DCSF (DC Server).

In some embodiments, the IMS media network function uses the H.248/Megaco protocol, the protocol between the DC signaling function and the DCMF can reuse this protocol to maximize the reuse of the existing network capacity, and SBI can also be expanded to solve problems such as a decoupling difficulty and a limited expansion capability. How to enable the DC signaling function and the DCMF to flexibly choose to support the H.248 protocol or the SBI is an urgent problem to be solved.

The disclosure provides a mechanism for the registration, discovery or selection of DC-related functions based on the standardization work of the DC.

The disclosure formulates a mechanism for the first network element to discover and select the DC control function by extending at least one of: an IMS registration, an IMS call, a DC call process, or a DC establishment process.

Based on this, an exemplary application of the embodiments of the disclosure in a practical application scenario will be described below.

An embodiment of the disclosure provides a method for processing information. FIG. 7 is a flowchart illustrating the method for processing information according to the embodiment of the disclosure. The method may implement a registration of a third network element. As illustrated in FIG. 7, the method may include the following operation 701 to operation 703.

At operation 701, the third network element sends a first DC registration request to a second network element.

In some embodiments, reporting the DC media capability registration request may be described as one of: reporting a DC media capability, reporting a DC network function, reporting a DC media network function, or sending the DC media capability registration request (i.e., Nnrf_NFManagement_NFRegister Request).

In some embodiments, the DC media capability includes at least one of the following 1) to 3).
1) A network function type (i.e., nfType), the nfType is the DCMF.
2) A network function service (i.e., nfService).

In some embodiments, the nfService includes at least one of: a DC media capability (i.e., Ndcmf_DCMediaCapability), a DC media (i.e., Ndcmf_DCMedia), a DC media service capability (i.e., Ndcmf_DCMediaServiceCapability), a DC media service (i.e., Ndcmf_DCMediaService), a DC service capability (i.e., Ndcmf_DCServiceCapability), a DC service (i.e., Ndcsf_DCService)/DC network function (i.e., Ndcsf_DCnf), a DC capability (i.e., Ndcmf_DCCapability), a DC media capability list (i.e., Ndcmf_DCMediaCapabilityList), a DC media list (i.e., Ndcmf_DCMediaList), a DC media service capability list (i.e., Ndcmf_DCMediaServiceCapabilityList), a DC media service list (i.e., Ndcmf_DCMediaServiceList), a DC service capability list (i.e., Ndcmf_DCServiceCapabilityList), a DC service list (i.e., Ndcsf_DCServiceList), a DC network function list (i.e., Ndcsf_DCnfList), or a DC capability list (i.e., DCCapabilityList).

In some embodiments, the nfService includes at least one of: an immersive calling, a real-time translation, an image rendering, or a screen sharing.

3) A DC interface capability (i.e., DCInterfaceCapability) includes at least one of: the H.248 protocol or the SBI.

At operation 702, the second network element stores a profile of the third network element (i.e., store NF Profile).

In some embodiments, the profile may also be information related to the DC media capability, and the second network element identifies the profile and/or the DC media capability of the third network element as available.

At operation 703, the second network element sends a registration response (i.e., Nnrf_NFManagement_NFRegister response) of the third network element to the third network element.

In some embodiments, the "sending" may also be described as "replying", "returning" and so on, which is not limited by the embodiments of the disclosure.

In some embodiments, the operation that the second network element sends the registration response of the third network element to the third network element may also be described as: the second network element notifying the third network element that the registration request has been received.

An embodiment of the disclosure provides a method for processing information. FIG. 8A is a flowchart illustrating the method for processing information according to the embodiment of the disclosure. The method may implement a discovery and selection of a third network element. As illustrated in FIG. 8A, the method may include the following operation 801a to operation 803a.

At operation 801a, a first network element sends a first service discovery request to a second network element.

In some embodiments, the first service discovery request may be one of: a DC media capability discovery request, a DC media discovery request, a DC media service capability discovery request, a DC media service discovery request, a DC service capability discovery request, a DC service discovery request, or a DC network function discovery request (i.e., Nnrf_NFDiscovery _Request). The name of the first service discovery request is not limited in the embodiment, and the above names may be equivalent or interchangeable unless otherwise specified.

In some embodiments, the first service discovery request includes or carries at least required DC media information, which may be one of: a DC media capability, a DC media, a DC media service capability, a DC media service, a DC service capability, a DC service, a DC network function, a DC capability, or information related to an interface capability. The content of the required DC media information and the above names of the content included in the required DC media information are not limited in the embodiment.

In some embodiments, the required DC media information may be sent in a form of a list.

In some embodiments, the information related to the interface capability may be an interface requirement or the interface capability.

At operation 802a, the second network element sends a first service discovery response to the first network element.

In some embodiments, the first service discovery response may be a DC media capability request response, which carries information related to the Network Function (NF) that meets the required DC media capability.

At operation 803a, the first network element selects the third network element (i.e., determines the third network element).

In some embodiments, the first network element selects a DC media function instance based on DC media requirement information, interface requirement information, location information of a first terminal, and/or other selected media network element information (e.g., IMS-AGW/MRFP/IM-MGw/TrGW).

In some embodiments, multi-mechanism interfaces (SBI and H.248) are compatible between the first network element and the DCMF.

In some embodiments, when the first network element sends a DCMF discovery or selection request to an NRF, the NRF sends information related to the DCMF to the first network element, which includes interface capability information.

In some embodiments, the first network element may autonomously select to establish a connection with the DCMF through the SBI or H.248 after receiving the interface capability information.

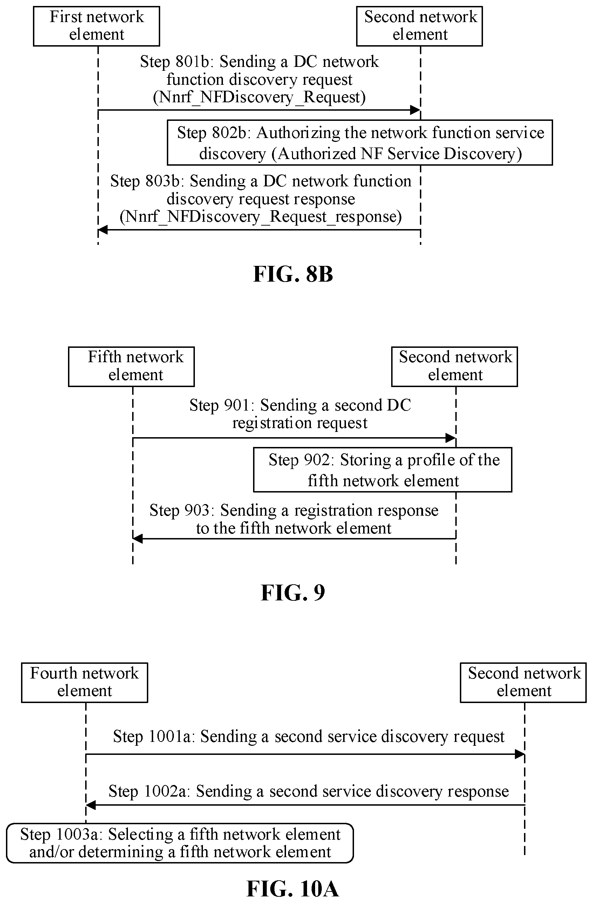

An embodiment of the disclosure provides a method for processing information. FIG. 8B is a flowchart illustrating the method for processing information according to the embodiment of the disclosure. The method may implement a discovery and selection of a third network element. As illustrated in FIG. 8B, the method may include the following operation 801b to operation 803b.

At operation 801b, a first network element sends a DC network function discovery request (i.e., Nnrf_NFDiscovery _Request) to a second network element.

At operation 802b, the second network element authorizes the network function service discovery (i.e., Authorized NF Service Discovery).

At operation 803b, the second network element sends a DC network function discovery request response (i.e., Nnrf_NFDiscovery_Request_response) to the first network element.

An embodiment not being part of the disclosure provides a method for processing information. FIG. 9 is a flowchart illustrating the method for processing information according to the disclosure. The method may implement a registration of a fifth network element. As illustrated in FIG. 9, the method may include the following operation 901 to operation 903.

At operation 901: the fifth network element sends a second DC registration request to a second network element.

In the disclosure, sending the second DC registration request may be described as one of: reporting a DC network function, reporting a DC control network function, or sending a DC control capability registration request (i.e., Nnrf_NFManagement_NFRegister Request).

The DC control capability includes one or more of the following 1) to 2).
1) A network function type (i.e., nfType), the nfType is the DCSF.
2) A network function service (i.e., nfService).

The nfService includes at least one of: a DC control capability (i.e., Ndcmf_DCControlCapability), a DC control (i.e., Ndcmf_DCControl), a DC control service capability (i.e., Ndcmf_DCControlServiceCapability), a DC control service (i.e., Ndcmf_DCControlService), a DC service capability (i.e., Ndcmf_DCServiceCapability), a DC service (i.e., Ndcsf_DCService), a DC network function (i.e., Ndcsf_DCnf), a DC capability (i.e., Ndcmf_DCCapability), a DC control capability list (i.e., Ndcmf_DCControlCapability List), a DC control list (i.e., Ndcmf_DCControlList), a DC control service capability list (i.e., Ndcmf_DCControlServiceCapabilityList), a DC control service list (i.e., Ndcmf_DCControlServiceList), a DC service capability list (i.e., Ndcmf_DCServiceCapabilityList), a DC service list (i.e., Ndcsf_DCServiceList), a DC network function list (i.e., Ndcsf_DCnfList), or a DC capability list (i.e., Ndcmf_DCCapabilitylist).

The nfService includes at least one of: a bootstrap DC capability, an application DC capability, an immersive calling, a translation, a screen sharing, an image rendering, an interactive menu, a multimedia incoming display, or a simultaneous interpretation.

The second network element stores a profile of the fifth network element (i.e., store NF Profile).

The profile may also be information related to the DC control capability, and the second network element identifies the profile and/or the DC control capability of the fifth network element as available.

At operation 903, the second network element sends a registration response (i.e., Nnrf_NFManagement_NFRegister response) of the fifth network element to the fifth network element.

The operation that the second network element sends the registration response of the fifth network element to the fifth network element may also be described as: the second network element notifying the fifth network element that the registration request has been received.

An embodiment not being part of the disclosure provides a method for processing information. FIG. 10A is a flowchart illustrating the method for processing information according to the disclosure. The method may implement a discovery and selection of a fifth network element. As illustrated in FIG. 10A, the method may include the following operation 1001a to operation 1003a.

At operation 1001a, a fourth network element sends a second service discovery request to a second network element.

The second service discovery request may be one of: a DC control capability discovery request, a DC control discovery request, a DC control service capability discovery request, a DC control service discovery request, a DC service capability discovery request, a DC service discovery request, or a DC network function discovery request (i.e., Nnrf_NFDiscovery_Request).

The second service discovery request includes or carries at least required DC control information, and the required DC control information may be one of: a DC control capability, a DC control, a DC control service capability, a DC control service, a DC service capability, a DC service, a DC network function, a DC capability, or information related to a current call request. The information related to the current call request may be calling information (a calling number) and called information (a called number).

The required DC control information may be sent in a form of a list.

At operation 1002a, the second network element sends a second service discovery response to the fourth network element.

The second service discovery response may be a DC control capability request response.

The NF Profile carries information related to the Network Function (NF) that meets the required DC control capability.

At operation 1003a, the fourth network element selects the fifth network element (i.e., determines the fifth network element).

The fourth network element selects a DC control function instance (i.e., selects the fifth network element or determines the fifth network element) based on DC control capability requirement information and/or information related to a call request.

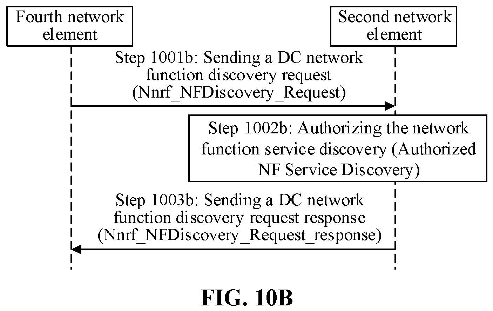

An embodiment not being part of the disclosure provides a method for processing information. FIG. 10B is a flowchart illustrating the method for processing information according to the disclosure. The method may implement a discovery and selection of a third network element. As illustrated in FIG. 10B, the method may include the following operation 1001b to operation 1003b.

At operation 1001b, a fourth network element sends a DC network function discovery request (i.e., Nnrf_NFDiscovery_Request) to a second network element.

At operation 1002b, the second network element authorizes the network function service discovery (i.e., Authorized NF Service Discovery).

At operation 1003b, the second network element sends a DC network function discovery request response (i.e., Nnrf_NFDiscovery_Request_response) to the fourth network element.

An attribute name of the DC control capability (i.e., DCControl Capability) is: a DC control discovery (i.e., DCControl Discovery).

The DC control capability indicates whether the DC server functionality supports the DC control capability or the DC capability discovery (i.e., when present, it shall indicate whether the DCSF supports DC Control Capability/Capability Discovery).

If so, the DC server functionality supports the DC control capability and/or the DC control capability discovery (i.e., true: DC Control Capability and/or DC Control Capability Discovery is supported by the DCSF).

Otherwise, the DC server functionality does not support the DC control capability and/or the DC control capability discovery (i.e., false: DC Control Capability and/or DC Control Capability Discovery is NOT supported by the DCSF).

An attribute name of the DC media capability (i.e., DCMediaCapability) is DCMediaDiscovery.

The DCMediaCapability indicates whether the DCMF supports the DC media capability or the DC media capability discovery (i.e., when present, it shall indicate whether the DCMF supports DC Media Capability/Capability Discovery).

If so, the DCMF supports the DC media capability and/or the DC media capability discovery (i.e., true: DC Media Capability and/or DC Media Capability Discovery is supported by the DCMF).

Otherwise, the DCMF does not support the DC media capability and/or the DC media capability discovery (i.e., false: DC Media Capability and/or DC Media Capability Discovery is NOT supported by the DCMF).

An attribute name of the DC interface capability (i.e., DCInterfaceCapability) is a DC interface discovery (i.e., DCInterfaceDiscovery).

The DCInterfaceDiscovery indicates whether the DCMF supports the H.248 (i.e., when present, it shall indicate whether the DCMF supports H.248).

If so, the DCMF supports the H.248 (i.e., true: H.248 is supported by the DCMF).

Otherwise, the DCMF does not support the H.248 (i.e., false: H.248 is NOT supported by the DCMF).

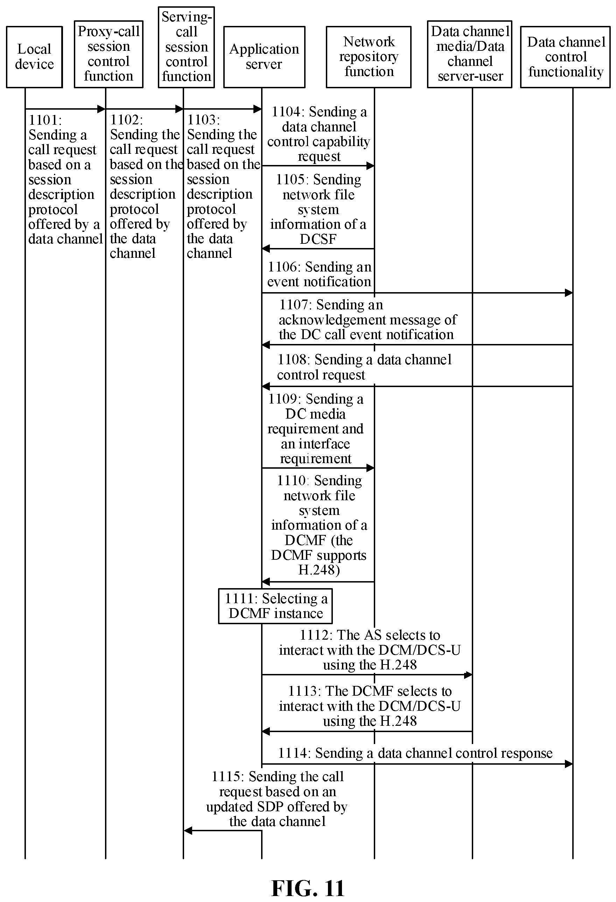

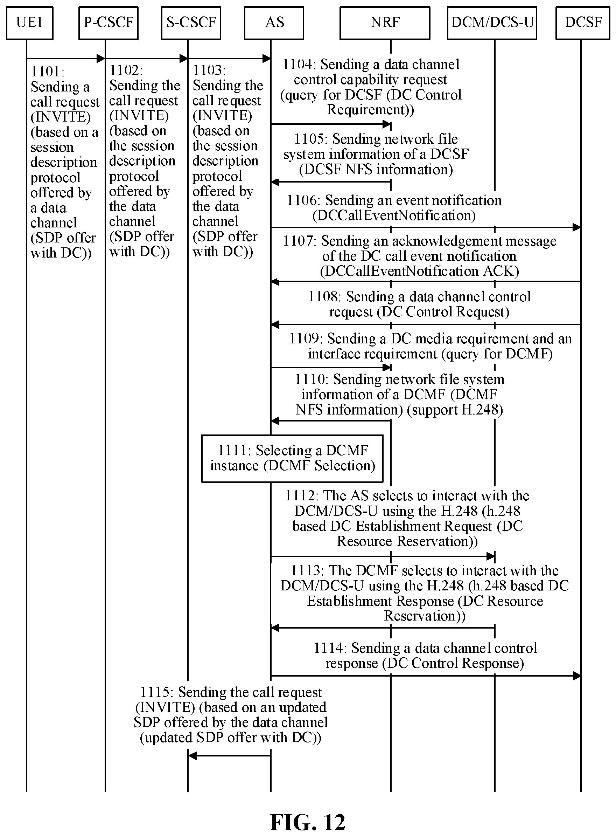

An embodiment of the disclosure provides a method for processing information. FIG. 11 and FIG. 12 are flowcharts illustrating the method for processing information according to the embodiment of the disclosure. As illustrated in FIG. 11 and FIG. 12, the method may include the following operation 1101 to operation 1115.

At operation 1101, a local device (e.g., UE1) sends a call request (i.e., INVITE) to a P-CSCF. The UE sends the INVITE based on a Session Description Protocol (SDP) offered by a DC.

In some embodiments, the local end may also be referred to as a calling side, and the local device may also be referred to as a calling device.

In some embodiments, the call request may also be an INVITE request, a re-INVITE, a re-INVITE request, an UPDATE, an UPDATE request, a call request, or a DC call request. The call request contains required DC information.

At operation 1102, the P-CSCF sends the call request to a Serving-Call Session Control Function (S-CSCF). The P-CSCF sends the INVITE based on the SDP offered by the DC.

At operation 1103, the S-CSCF sends the call request to an AS. The S-CSCF sends the INVITE based on the SDP offered by the DC.

In some embodiments, the local device sends the call request, which is routed to the AS after passing through the P-CSCF/S-CSCF.

At operation 1104, the AS sends a DC control capability request (i.e., query for DCSF) to an NRF.

In some embodiments, the DC control capability request may be described as: a DCControlCapability or a DCServiceRequirement.

The DC control capability request indicates the need for an NF that supports a DC control capability.

At operation 1105, the NRF replies a DC control capability request response to the AS. The NRF sends Network File System (NFS) information of the DCSF (i.e., DCSF NFS information) to the AS.

In some embodiments, an NF profile carries information related to an NF (i.e., DCSF) that meets the required DC control capability and/or a response with the selected DCSF.

In some embodiments, the AS selects the DCSF based on the NF profile replied by the NRF.

At operation 1106, the AS sends an event notification to the DCSF. The event notification may be a DC call event notification (i.e., DCCallEventNotification).

The event notification contains, carries, or indicates DC information or DC media description of the call.

In some embodiments, the event notification may also be described as: a call event notification, or a DC event notification. Sending the event notification may be described as: sending or forwarding the call request (DC call request). The name of the event notification is not limited in the embodiment, and the above names may be equivalent or interchangeable.

In some embodiments, the AS forwards or sends the call request based on at least one of: user subscription information, subscription to a DC control function, AS configuration or policy (i.e., call request information), an event notification triggered by support of a network or device for a DC capability, or a call request (DC call request) triggered by the support of the network or device for the DC capability.

The event notification may also be described as one of: the call event notification, the DC event notification, or the DC call event notification. The name of the event notification is not limited in the embodiment, and the above names may be equivalent or interchangeable.

In some embodiments, the AS forwards or sends one of: the call request, the call event, the call event notification, the DC request, the DC call request, the DC call event, or the DC call event notification, to the DC control function, and the forwarded or sent content needs to include the DC information.

At operation 1107, the DC control function returns an acknowledgement message (i.e., DCCallEventNotification ACK) of the DC call event notification to the AS.

At operation 1108, the DC control function sends a data channel control request (i.e., DC Control Request) to the AS.

In some embodiments, the DC control function determines a DC control/processing policy or decision based on one or more of: a DC control function local configuration, an operator policy, the event notification sent at operation 1102, the call event notification, the call request, the DC information included in the DC call request, the user subscription information, or whether a local user, a peer user, a local network, a peer network supports the DC capability, a capability list, a service, a service list, an application, or an application list.

At operation 1109, the AS or IMS sends a DC media requirement and an interface requirement to the NRF. The DC media requirement may be described as: query for DCMF.

In some embodiments, the DC media requirement indicates a need for an NF that meets a DC media related capability.

At operation 1110, the NRF replies a DC media capability request response to the AS. The NRF sends NFS information of the DCMF (i.e., DCSF NFS information) to the AS, and the NRF interacts information with the AS about the support for the H.248 by the DCMF.

The DC media capability request response carries information related to the NF that meets the required DC media capability. The NRF interacts information with the DCMF about the support for the H.248 by the DCMF.

At operation 1111, the AS selects a DC media function instance (i.e., DCMF Selection).

The AS selects the DC media function instance based on a DC media capability requirement, the interface requirement, location information of the UE and/or information about other selected media network elements (e.g., IMS-AGW/MRFP/IM-MGw/TrGW).

At operation 1112, the AS selects to interact with a DCM/DCS-U using the H.248 (h.248 based DC Establishment Request (DC Resource Reservation)).

At operation 1113, the DCMF selects to interact with the DCM/DCS-U using the H.248 (h.248 based DC Establishment Request (DC Resource Reservation)).

At operation 1114, the AS sends a data channel control response (i.e., DC Control Response) to the DCSF.

At operation 1115, the AS sends the call request (i.e., INVITE) to the S-CSCF. The UE sends the INVITE based on an updated SDP offered by the DC.

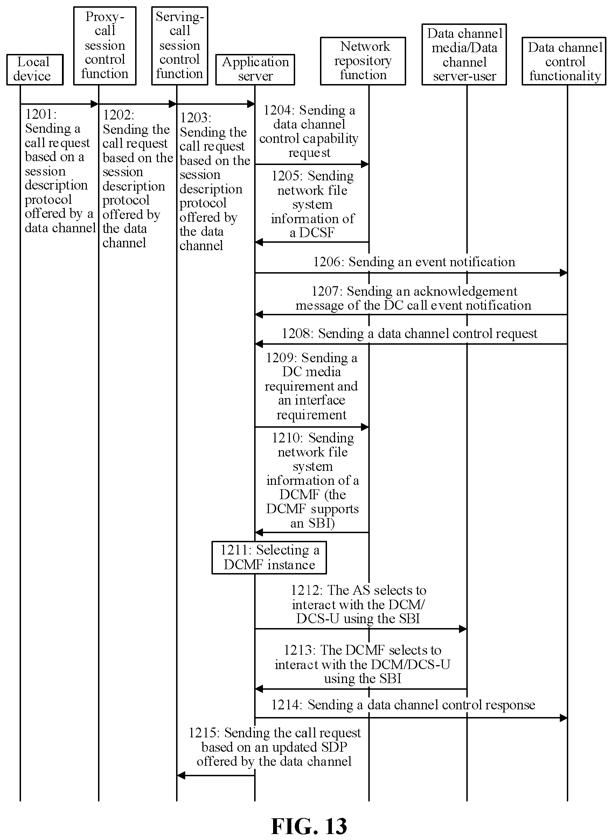

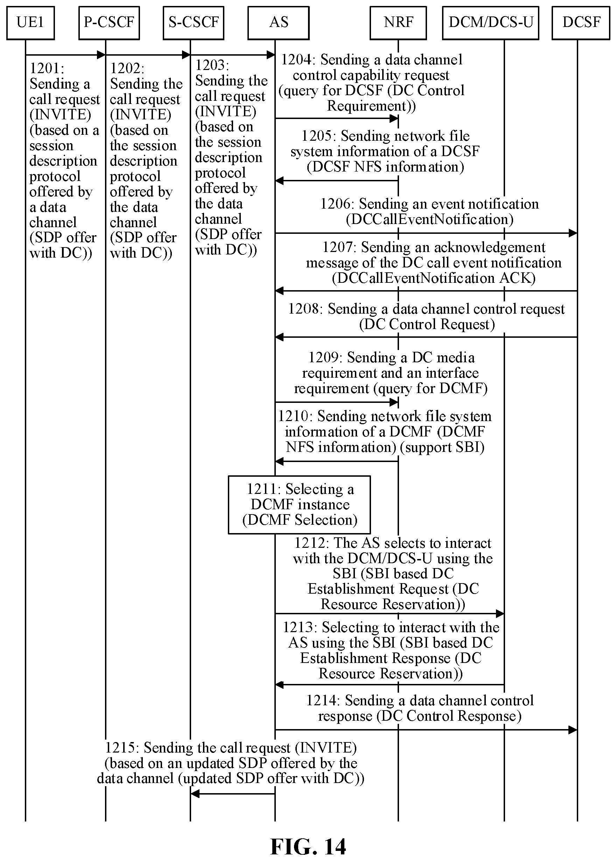

An embodiment not being part of the disclosure provides a method for processing information. FIG. 13 and FIG. 14 are flowcharts illustrating the method for processing information according to the disclosure. As illustrated in FIG. 13 and FIG. 14, the method may include the following operation 1201 to operation 1215.

At operation 1201, a local device (e.g., UE1) sends a call request (i.e., INVITE) to a P-CSCF. The UE sends the INVITE based on a Session Description Protocol (SDP) offered by a DC.

At operation 1202, the P-CSCF sends the call request to an S-CSCF. The P-CSCF sends the INVITE based on the SDP offered by the DC.

At operation 1203, the S-CSCF sends the call request to an AS. The S-CSCF sends the INVITE based on the SDP offered by the DC.

At operation 1204, the AS sends a DC control capability request (i.e., query for DCSF) to an NRF.

At operation 1205, the NRF replies a DC control capability request response to the AS. The NRF sends NFS information of the DCSF (i.e., DCSF NFS information) to the AS.

At operation 1206, the AS sends an event notification to the DCSF. The event notification may be a DC call event notification (i.e., DCCallEventNotification).

At operation 1207, the DC control function returns an acknowledgement message (i.e., DCCallEventNotification ACK) of the DC call event notification to the AS.

At operation 1208, the DC control function sends a data channel control request (i.e., DC Control Request) to the AS.

At operation 1209, the AS sends a DC media requirement and an interface requirement to the NRF. The DC media requirement may be described as: query for DCMF.

At operation 1210, the NRF replies a DC media capability request response to the AS. The NRF sends NFS information of the DCMF (i.e., DCSF NFS information) to the AS, and the NRF interacts information with the AS about the support for the SBI by the DCMF.

At operation 1211, the AS selects a DC media function instance (i.e., DCMF Selection).

At operation 1212, the AS selects to interact with a DCM/DCS-U using the SBI (SBI based DC Establishment Request (DC Resource Reservation)).

At operation 1213, the DCM/DCS-U selects to interact with the AS using the SBI (SBI based DC Establishment Request (DC Resource Reservation)).

At operation 1214, the AS sends a data channel control response (i.e., DC Control Response) to the DCSF.

At operation 1215, the AS sends the call request (i.e., INVITE) to the S-CSCF. The UE sends the INVITE based on an updated SDP offered by DC.

If the IMS-AS does not discover the Data Channel Server (DCS), the IMS-AS shall utilize the NRF to discover DCS instance(s) unless DCS information is available by other means, e.g., locally configured on the IMS-AS.

It should be noted that the DCS-C could not know what subscribers each MMTel AS serve for the MMTel AS is selected by the S-CSCF and, there are two solutions.
1) The DCS-C should subscribe to all the MMTel ASs in the network for the media event notification.
2) The MMTel AS is locally configured for discovering the DCS-C serving specific subscribers.

Media control is performed during an IMS session, including SDP operations such as initiating, terminating, and forwarding some media stream.

The DCS-C, DCS-M and MMTel AS should register their services to the NRF before providing services to the consumers, through the NF service registration procedure.

In the disclosure, an SBI-based DC media capability registration, discovery and selection mechanisms are implemented.

In the disclosure, the selection of the DCMF based on the DCMediaCapabilityList and the DCInterfaceCapability is implemented.

In the disclosure, an SBI-based DC control capability registration, discovery and selection mechanisms are implemented.

In the disclosure, the selection of the DCSF based on a SupportedDCServiceList is implemented.

In the disclosure, a compatible selection mechanism for an H.248 interface is implemented.

It should be noted that, although the steps of the methods in the disclosure are described in a specific order in the drawings, this does not require or imply that the steps must be performed in the specific order, or that all of the illustrated steps must be performed to achieve the desired result. Additionally or alternatively, some steps may be omitted, multiple steps may be combined into a single step, and/or a single step may be decomposed into multiple steps. Alternatively, steps from different embodiments may be combined to form a new technical solution.

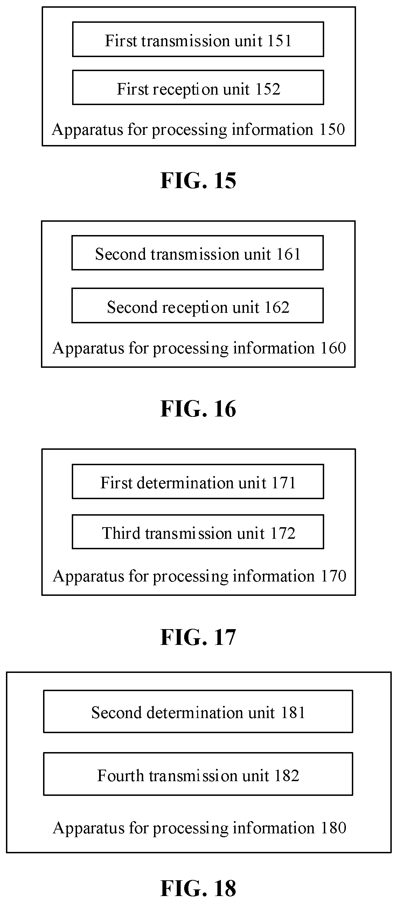

Based on the above embodiments, an embodiment of the disclosure provides an apparatus for processing information. FIG. 15 is a schematic diagram illustrating a structure of the apparatus for processing information according to the embodiment of the disclosure. As illustrated in FIG. 15, the apparatus for processing information is applied to a first network element, and the apparatus 15 for processing information includes a first transmission unit 151 and a first reception unit 152.

The first transmission unit 151 is configured to send a first service discovery request to a second network element. The first service discovery request includes at least required DC media information and/or information related to a current call request.

The first reception unit 152 is configured to receive a first service discovery response returned by the second network element. The first service discovery response includes at least information related to a third network element or information related to a set of third network elements.

In some embodiments, the apparatus 15 further includes a first selection unit. The first selection unit is configured to select the third network element based on at least one of: the information related to the set of the third network elements, DC media requirement information, interface requirement information, the information related to the current call request, location information of a first terminal, IP address information of the first terminal, or information of a selected media function.

In some embodiments, the first selection unit is configured to use previously determined information related to the third network element or information related to the set of the third network elements when the previously determined information related to the third network element or information related to the set of the third network elements is present in a cache, or when a cache duration is less than or equal to a duration threshold.

In some embodiments, the first transmission unit 151 is configured to send the first service discovery request to the second network element when the previously determined information related to the third network element or information related to the set of the third network elements is absent in a cache, or when a cache duration of the previously determined information related to the third network element or information related to the set of the third network elements is greater than the duration threshold.

In some embodiments, the apparatus 150 further includes a first establishment unit. The first establishment unit is configured to select a connection establishment method based on a local policy when obtaining an interface capability and/or an interface capability list of the third network element or the set of the third network elements.

In some embodiments, the first establishment unit is configured to: establish a connection with the third network element based on a first interface protocol when knowing that the third network element supports the first interface protocol and a second interface protocol; and establish the connection with the third network element based on the second interface protocol when failing to establish the connection with the third network element based on the first interface protocol.

The disclosure provides an apparatus for processing information. FIG. 16 is a schematic diagram illustrating a structure of the apparatus for processing information according to the disclosure. As illustrated in FIG. 16, the apparatus 16 for processing information is applied to a fourth network element, and the apparatus 16 for processing information includes a second transmission unit 161 and a second reception unit 162.

The second transmission unit 161 is configured to send a second service discovery request to a second network element. The second service discovery request includes at least required DC control information and/or information related to a current call request.

The second receiving unit 162 is configured to receive a second service discovery response returned by the second network element. The second service discovery response includes at least information related to a fifth network element or information related to a set of fifth network elements.

In the disclosure, the apparatus 16 for processing information further includes a second selection unit. The second selection unit is configured to select the fifth network element based on at least one of: the information related to the set of the fifth network elements, DC control requirement information, interface requirement information, the information related to the current call request, location information of a first terminal, IP address information of the first terminal, or a selected IMS control function.

In the disclosure, the second transmission unit 161 is configured to send the second service discovery request to the second network element when previously determined information related to the fifth network element or information related to the set of the fifth network elements is absent in a cache, or when a cache duration of the previously determined information related to the fifth network element or information related to the set of the fifth network elements is greater than a duration threshold.

In the disclosure, the second selection unit is configured to use the previously determined information related to the fifth network element or information related to the set of the fifth network elements when the previously determined information related to the fifth network element or information related to the set of the fifth network elements is present in the cache, or when the cache duration is less than or equal to the duration threshold.

In the disclosure, the apparatus 16 further includes a second establishment unit. The second establishment unit is configured to select a connection establishment mode based on a local policy when obtaining an interface capability and/or an interface capability list of the fifth network element or the set of the fifth network elements.

In the disclosure, the second establishment unit is configured to: establish a connection with the fifth network element based on a first interface protocol when knowing that the fifth network element supports the first interface protocol and a second interface protocol; and establish the connection with the fifth network element based on the second interface protocol when failing to establish the connection with the fifth network element based on the first interface protocol.

An embodiment of the disclosure provides an apparatus for processing information. FIG. 17 is a schematic diagram illustrating a structure of the apparatus for processing information according to the embodiment of the disclosure. As illustrated in FIG. 17, the apparatus 17 for processing information is applied to a second network element, and the apparatus 17 for processing information includes a first determination unit 171 and a third transmission element 172.

The first determination unit 171 is configured to determine information related to a third network element or information related to a set of third network elements.

The third transmission unit 172 is configured to send a first service discovery response to a first network element. The first service discovery response includes at least the information related to the third network element or the information related to the set of the third network elements.

In some embodiments, the first determination unit 171 is configured to determine a third network element that satisfies the required DC media information and/or the information related to the current call request based on a local policy, and determine the information related to the third network element.

In some embodiments, the first determination unit 171 is configured to determine a set of third network elements that satisfy the required DC media information and/or the information related to the current call request, and determine the information related to the set of the third network elements.

The disclosure provides an apparatus for processing information. FIG. 18 is a schematic diagram illustrating a structure of the apparatus for processing information according to the disclosure. As illustrated in FIG. 18, the apparatus 18 for processing information is applied to a second network element, and the apparatus 18 for processing information includes a second determination unit 181 and a fourth transmission element 182.

The second determination unit 181 is configured to determine information related to a fifth network element or information related to a set of fifth network elements.

The fourth transmitting unit 182 is configured to send a second service discovery response to a fourth network element. The second service discovery response includes at least the information related to the fifth network element or the information related to the set of the fifth network elements.

In the disclosure, the second determination unit 181 is configured to determine the fifth network element or the set of the fifth network elements that satisfy the required DC control information and/or the information related to the current call request based on a local policy, and determine the information related to the fifth network element or the information related to the set of the fifth network elements.

In the disclosure, the second determination unit 181 is configured to determine the set of the fifth network elements that satisfy the required DC control information and/or the information related to the current call request, and determine the information related to the set of the fifth network elements.

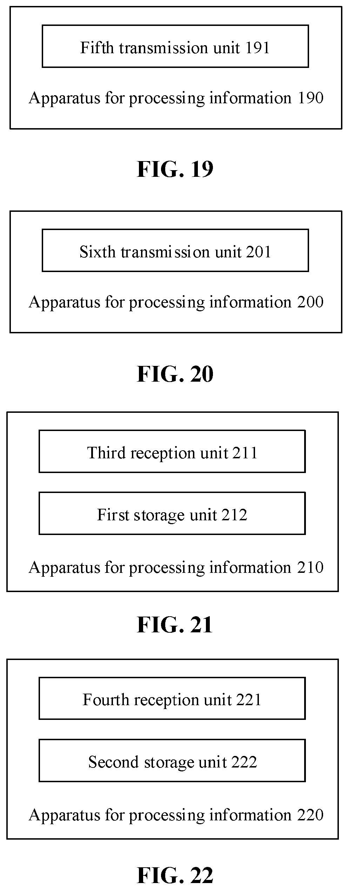

The disclosure provides an apparatus for processing information. FIG. 19 is a schematic diagram illustrating a structure of the apparatus for processing information according to the disclosure. As illustrated in FIG. 19, the apparatus 19 for processing information is applied to a third network element, and the apparatus 19 for processing information includes a fifth transmission unit 191.

The fifth transmission unit 191 is configured to send a first DC registration request to a second network element. The first DC registration request is used for notifying a profile of the third network element.

The disclosure provides an apparatus for processing information. FIG. 20 is a schematic diagram illustrating a structure of the apparatus for processing information according to the disclosure. As illustrated in FIG. 20, the apparatus 20 for processing information is applied to a fifth network element, and the apparatus 20 for processing information includes a sixth transmission unit 2001.

The sixth transmitting unit 2001 is configured to send a second DC registration request to a second network element. The second DC registration request is used for notifying a profile of the fifth network element.

The disclosure provides an apparatus for processing information. FIG. 21 is a schematic diagram illustrating a structure of the apparatus for processing information according to the disclosure. As illustrated in FIG. 21, the apparatus 21 for processing information is applied to a second network element, and the apparatus 21 for processing information includes a third reception unit 211 and a first storage unit 212.

The third reception unit 211 is configured to receive a first DC registration request from a third network element. The first DC registration request is used for notifying a profile of the third network element.

The first storage unit 212 is configured to store the profile of the third network element.

The disclosure provides an apparatus for processing information. FIG. 22 is a schematic diagram illustrating a structure of the apparatus for processing information according to the disclosure. As illustrated in FIG. 22, the apparatus 22 for processing information is applied to a second network element, and the apparatus 22 for processing information includes a fourth reception unit 221 and a second storage unit 222.

The fourth reception unit 221 is configured to receive a second DC registration request from a fifth network element. The second DC registration request is used for notifying a profile of the fifth network element.

The second storage unit 222 is configured to store the profile of the fifth network element.

The above description of the apparatus embodiments is similar to the above description of the method embodiments, and has similar beneficial effects as the method embodiments. For technical details not disclosed in the apparatus embodiments of the disclosure, reference is made to the description of the method embodiments of the disclosure for understanding.

It should be noted that division of units of the apparatus for processing information in the embodiments of the disclosure is schematic and only is a logic function division, and other division manners may be adopted during practical implementation. In addition, functional units in each embodiment of the disclosure may be integrated into a processing unit, or each of the functional units may exist physically and independently, or two or more than two units may also be integrated into a unit. The above integrated unit may be implemented in the form of hardware, or in the form of a software functional unit, or in the form of a combination of hardware and software.

It is noted that, if the above methods in the embodiments of the disclosure are implemented in the form of the software functional unit and is sold or used as an independent product, the functional unit may be stored in a computer-readable storage medium. Based on such an understanding, the technical solutions of the embodiments of the disclosure substantially, or parts making contributions to the related art, may be embodied in the form of a software product, and the computer software product is stored in a storage medium, including a plurality of instructions configured to enable a communication device to execute all or part of the steps of the method in each embodiment of the disclosure. The above storage medium includes various media capable of storing program codes, such as a U disk, a mobile hard disk, a Read Only Memory (ROM), a magnetic disk or an optical disk. Thus, the embodiments of the disclosure are not limited to any particular combination of hardware and software.

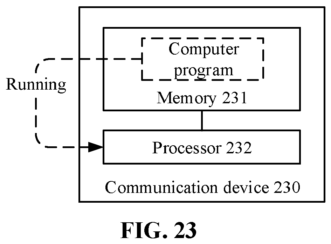

The disclosure provides a communication device. FIG. 23 is a schematic diagram illustrating a hardware entity of the communication device according to the disclosure. As illustrated in FIG. 23, the communication device 230 includes a memory 231 and a processor 232. The memory 231 is configured to store a computer program executable on the processor 232, and the processor 232 is configured to implement operations in the methods provided by the above embodiments when executing the program.

It should be noted that the memory 231 is configured to store instructions and applications executable by the processor 232, and is further configured to cache data (e.g., image data, audio data, voice communication data and video communication data) to be processed or already processed by each unit in the processor 232 and the communication device 230, which may be implemented by a flash or a Random Access Memory (RAM).

The disclosure provides a computer-readable storage medium having stored thereon a computer program that, when executed by a processor, causes the processor to implement operations in the methods provided by the above embodiments.

The disclosure further provides a computer program product including instructions. When the instructions are executed on a computer, the computer is caused to implement operations in the methods provided by the above embodiments.

Herein, it is noted that the above description of the storage medium and device is similar to the description of the above method embodiments, and has similar beneficial effects as the method embodiments. For technical details not disclosed in the storage medium and device of the disclosure, reference is made to the description of the method embodiments of the disclosure for understanding.

It is to be understood that "one embodiment", "an embodiment", "some embodiments" mentioned throughout the specification mean that specific features, structures or characteristics associated with embodiments are included in at least one embodiment of the disclosure. Thus, "in one embodiment", "in an embodiment" or "in some embodiments" appearing throughout the specification do not necessarily refer to the same embodiment. Further, the specific features, structures or characteristics may be combined in a suitable manner in any one or more embodiments. It should be understood that in various embodiments of the disclosure, the serial numbers of the above-mentioned processes do not imply the execution order, the execution order of each process should be determined by its function and inherent logic, and should not constitute any limitation on implementation processes of the embodiments of the disclosure. The above-described serial numbers of the embodiments of the disclosure are for descriptive purposes only, and do not represent the advantages and disadvantages of the embodiments. The above description of the various embodiments tends to emphasize differences between the various embodiments, and the same or similar part thereof may be referred to each other, and will not be repeated herein for the sake of brevity.

Herein, the term "and/or" is merely an association relationship that describes associated objects, and represents that three relationships may exist. For example, an object A and/or object B may represent three situations: independent existence of the object A, existence of both the object A and the object B, and independent existence of the object B.

It should be noted that, the terms "comprising/comprise," "including/include" or any other variant thereof herein are intended to encompass a non-exclusive inclusion such that a process, method, item, or apparatus that includes a series of elements not only includes those elements, but also includes other elements that are not explicitly listed, or further includes elements inherent to such a process, method, item, or apparatus. In the absence of further restrictions, an element defined by the phrase "comprising a..." does not preclude the existence of additional identical elements in a process, method, item, or apparatus that includes the element.

In several embodiments provided by the disclosure, it should be understood that the disclosed apparatus and methods may be implemented in other ways. The device embodiments described above are merely illustrative, for example, the division of the units is only a logical functional division, and there may be other division methods when it is actually implemented. For example, multiple units or components may be combined, or may be integrated into another system, or some features may be ignored, or not be executed. In addition, the displayed or discussed coupling, or direct coupling, or communication connection among various components may be indirect coupling or communication connection implemented through some interfaces, apparatuses or modules, and may be implemented in electrical, mechanical, or other forms.

The units described above as separate parts may be, or may not be, physically separated. The components displayed as units may be, or may not be, physical components, that is, they may be located in one place or may be distributed across multiple network units. Some or all of these units may be selected according to actual needs to achieve the purpose of the embodiments.

In addition, functional units in each embodiment of the disclosure may be integrated into a processing unit, or each of the functional units may exist as an individual unit, or two or more than two units may also be integrated into a unit. The integrated unit may be implemented in the form of hardware, or in the form of a combination of hardware and software function units.

One of ordinary skill in the art should understand that all or part of the steps in the method embodiments may be completed by a program instructing the relevant hardware, and the program may be stored in the computer-readable storage medium. When the program is executed, the steps included in the above method embodiments are performed. The above storage medium includes various media capable of storing program codes such as a removable storage device, a ROM, a magnetic disk, or an optical disk.

Alternatively, when being realized in form of software functional unit and sold or used as an independent product, the integrated functional unit may also be stored in a computer-readable storage medium. Based on such an understanding, the technical solutions of the embodiments of the disclosure substantially, or parts making contributions to the conventional art, may be embodied in form of software product, and the computer software product is stored in a storage medium, including a plurality of instructions configured to enable a communication device to execute all or part of the steps of the method in each embodiment of the disclosure. The abovementioned storage medium includes: various media capable of storing program codes such as a mobile storage device, a ROM, a magnetic disk or an optical disk.

The methods disclosed in several method embodiments provided in the disclosure may be arbitrarily combined to obtain new method embodiments without conflicting with each other.

The features disclosed in several product embodiments provided in the disclosure may be arbitrarily combined to obtain new product embodiments without conflicting with each other.

The features disclosed in several method or device embodiments provided in the disclosure may be arbitrarily combined to obtain new method embodiments or device embodiments without conflicting with each other.

The above descriptions are only the specific implementations of the disclosure, and the scope of protection of the disclosure is not limited thereto. Therefore, the scope of protection of the disclosure shall be subject to the scope of protection of the claims.

## Claims

1. A method for processing information, applied to a first network element, the method comprising:
sending (101) a first service discovery request to a second network element, the first service discovery request comprising at least one of required Data Channel, DC, media information or information related to a current call request;
receiving (102) a first service discovery response returned by the second network element, the first service discovery response comprising at least information related to a third network element or information related to a set of third network elements; and
selecting the third network element based on at least one of: DC media requirement information, interface requirement information, the information related to the current call request, location information of a first terminal, Internet Protocol, IP, address information of the first terminal, or information of a selected media function.

2. The method of claim 1, wherein the first service discovery response carries the information related to the third network element or the information related to the set of the third network elements.

3. The method of claim 1 or 2, wherein the third network element is one of: a DC Media Functionality, DCMF, a DC media function, a DC network function instance, a DC media network function instance, a DC service, or a DC media service.

4. The method of claim 1, wherein the first network element is one of: an Application Server, AS, a DC Control Functionality, DCSF, or an Internet Protocol Multimedia Subsystem, IMS, network element.

5. The method of claim 1, wherein the first service discovery request is one of: a DC media capability discovery request, a DC media discovery request, a DC media service capability discovery request, a DC media service discovery request, a DC service capability discovery request, a DC service discovery request, or a DC network function discovery request.

6. The method of claim 1 or 5, wherein the required DC media information comprises at least one of: a DC media capability, a DC media, a DC media service capability, a DC media service, a DC service capability, a DC service, a DC network function, a DC capability, an interface capability, a DC media capability list, a DC media list, a DC media service capability list, a DC media service list, a DC service capability list, a DC service list, a DC network function list, a DC capability list, or an interface capability list.

7. The method of claim 1, wherein the information related to the third network element or the information related to the set of the third network elements comprises at least one of: an identification, address information, DC network function type information, service instance list information, DC media function instance information, a DC media network function, or other information related to a DC media service or capability.

8. A method for processing information, applied to a second network element, the method comprising:
receiving a first service discovery request from a first network element, the first service discovery request comprising at least one of required Data Channel, DC, media information or information related to a current call request;
determining information related to a third network element or information related to a set of third network elements; and
sending a first service discovery response to the first network element, the first service discovery response comprising at least the information related to the third network element or the information related to the set of the third network elements, wherein the first service discovery response is used for selecting the third network element based on at least one of: DC media requirement information, interface requirement information, the information related to the current call request, location information of a first terminal, Internet Protocol, IP, address information of the first terminal, or information of a selected media function.

9. The method of claim 8, wherein determining the information related to the third network element comprises:
determining, based on a local policy, a third network element that satisfies at least one of the required DC media information or the information related to the current call request; and determining the information related to the third network element.

10. The method of claim 8, wherein determining the information related to the set of the third network elements comprises:
determining a set of third network elements that satisfy at least one of the required DC media information or the information related to the current call request; and determining the information related to the set of the third network elements.

11. The method of any of claims 8 to 10, wherein the third network element is one of: a DC Media Functionality, DCMF, a DC media function, a DC network function instance, a DC media network function instance, a DC service, or a DC media service.

12. The method of claim 8, wherein
the first service discovery request is one of: a DC media capability discovery request, a DC media discovery request, a DC media service capability discovery request, a DC media service discovery request, a DC service capability discovery request, a DC service discovery request, or a DC network function discovery request,
and/or
the required DC media information comprises at least one of: a DC media capability, a DC media, a DC media service capability, a DC media service, a DC service capability, a DC service, a DC network function, a DC capability, an interface capability, a DC media capability list, a DC media list, a DC media service capability list, a DC media service list, a DC service capability list, a DC service list, a DC network function list, a DC capability list, or an interface capability list.

13. The method of claim 8, wherein the information related to the third network element or the information related to the set of the third network elements comprises at least one of: an identification, address information, DC network function type information, service instance list information, DC media function instance information, a DC media network function, or other information related to a DC media service or capability.

14. An apparatus for processing information, comprising:
a first transmission unit (151), configured to send a first service discovery request to a second network element, the first service discovery request comprising at least one of required Data Channel, DC, media information or information related to a current call request;
a first reception unit (152), configured to receive a first service discovery response returned by the second network element, the first service discovery response comprising at least information related to a third network element or information related to a set of third network elements; and
a first selection unit, configured to select the third network element based on at least one of: DC media requirement information, interface requirement information, the information related to the current call request, location information of a first terminal, Internet Protocol, IP, address information of the first terminal, or information of a selected media function.

15. An apparatus for processing information, comprising:
a first reception unit, configured to receive a first service discovery request from a first network element, the first service discovery request comprising at least one of required Data Channel, DC, media information or information related to a current call request;
a first determination unit (171), configured to determine information related to a third network element or information related to a set of third network elements; and
a third transmission unit (172), configured to send a first service discovery response to the first network element, the first service discovery response comprising at least the information related to the third network element or the information related to the set of the third network elements, wherein the first service discovery response is used for selecting the third network element based on at least one of: DC media requirement information, interface requirement information, the information related to the current call request, location information of a first terminal, Internet Protocol, IP, address information of the first terminal, or information of a selected media function.

## Patentansprüche

1. Verfahren zum Verarbeiten von Informationen, die auf ein erstes Netzwerkelement angewendet werden, das Verfahren umfassend:
Senden (101) einer ersten Diensterkennungsanforderung an ein zweites Netzwerkelement, die erste Diensterkennungsanforderung umfassend mindestens eines von erforderlichen Datenkanalmedieninformationen, DC-Medieninformationen, oder Informationen, die sich auf eine aktuelle Anrufanforderung beziehen;
Empfangen (102) einer ersten Diensterkennungsantwort, die durch das zweite Netzwerkelement zurückgegeben wird, die erste Diensterkennungsantwort umfassend mindestens Informationen, die sich auf ein drittes Netzwerkelement beziehen, oder Informationen, die sich auf einen Satz von dritten Netzwerkelementen beziehen; und
Auswählen des dritten Netzwerkelements basierend auf mindestens einem von: DC-Medienanforderungsinformationen, Schnittstellenanforderungsinformationen, die Informationen, die sich auf die aktuelle Anrufanforderung beziehen, Standortinformationen eines ersten Endgeräts, Internetprotokolladressinformationen, IP-Adressinformationen des ersten Endgeräts oder Informationen einer ausgewählten Medienfunktion.

2. Verfahren nach Anspruch 1, wobei die erste Diensterkennungsantwort die Informationen, die sich auf das dritte Netzwerkelement beziehen, oder die Informationen trägt, die sich auf den Satz der dritten Netzwerkelemente beziehen.

3. Verfahren nach Anspruch 1 oder 2, wobei das dritte Netzwerkelement eines ist von: einer DC-Medienfunktionalität, DCMF, einer DC-Medienfunktion, einer DC-Netzwerkfunktionsinstanz, einer DC-Mediennetzwerkfunktionsinstanz, einem DC-Dienst oder einem DC-Mediendienst.

4. Verfahren nach Anspruch 1, wobei das erste Netzwerkelement eines ist von: einem Anwendungsserver, AS, einer DC-Steuerfunktionalität, DCSF, oder einem Internetprotokoll-Multimedia-Teilsystem-Netzwerkelement, IMS-Netzwerkelement.

5. Verfahren nach Anspruch 1, wobei die erste Diensterkennungsanforderung eine ist von: einer DC-Medienfähigkeitserkennungsanforderung, einer DC-Medienerkennungsanforderung, einer DC-Mediendienstfähigkeitserkennungsanforderung, einer DC-Mediendiensterkennungsanforderung, einer DC-Dienstfähigkeitserkennungsanforderung, einer DC-Diensterkennungsanforderung oder einer DC-Netzwerkfunktionserkennungsanforderung.

6. Verfahren nach Anspruch 1 oder 5, wobei die erforderlichen DC-Medieninformationen mindestens eines umfassen von: einer DC-Medienfähigkeit, einem DC-Medium, einer DC-Mediendienstfähigkeit, einem DC-Mediendienst, einer DC-Dienstfähigkeit, einem DC-Dienst, einer DC-Netzwerkfunktion, einer DC-Fähigkeit, einer Schnittstellenfähigkeit, einer DC-Medienfähigkeitsliste, einer DC-Medienliste, einer DC-Mediendienstfähigkeitsliste, einer DC-Mediendienstliste, einer DC-Dienstfähigkeitsliste, einer DC-Dienstliste, einer DC-Netzwerkfunktionsliste, einer DC-Fähigkeitsliste oder einer Schnittstellenfähigkeitsliste.

7. Verfahren nach Anspruch 1, wobei die Informationen, die sich auf das dritte Netzwerkelement, oder die Informationen beziehen, die sich auf den Satz der dritten Netzwerkelemente beziehen, mindestens eines umfassen von: einer Identifikation, Adressinformationen, DC-Netzwerkfunktionstypinformationen, Dienstinstanzlisteninformationen, DC-Medienfunktionsinstanzinformationen, einer DC-Mediennetzwerkfunktion oder anderen Informationen, die sich auf einen DC-Mediendienst oder eine DC-Medienfähigkeit beziehen.

8. Verfahren zum Verarbeiten von Informationen, auf ein zweites Netzwerkelement angewendet werden, das Verfahren umfassend:
Empfangen einer ersten Diensterkennungsanforderung von einem ersten Netzwerkelement, die erste Diensterkennungsanforderung umfassend mindestens eines von erforderlichen Datenkanalmedieninformationen, DC-Medieninformationen, oder Informationen, die sich auf eine aktuelle Anrufanforderung beziehen;
Bestimmen von Informationen, die sich auf ein drittes Netzwerkelement beziehen, oder von Informationen, die sich auf einen Satz von dritten Netzwerkelementen beziehen; und
Senden einer ersten Diensterkennungsantwort an das erste Netzwerkelement, die erste Diensterkennungsantwort umfassend mindestens die Informationen, die sich auf das dritte Netzwerkelement beziehen, oder die Informationen, die sich auf den Satz der dritten Netzwerkelemente beziehen, wobei die erste Diensterkennungsantwort zum Auswählen des dritten Netzwerkelements basierend auf mindestens einem verwendet wird von: DC-Medienanforderungsinformationen, Schnittstellenanforderungsinformationen, die Informationen, die sich auf die aktuelle Anrufanforderung beziehen, Standortinformationen eines ersten Endgeräts, Internetprotokolladressinformationen, IP-Adressinformationen des ersten Endgeräts oder Informationen einer ausgewählten Medienfunktion.

9. Verfahren nach Anspruch 8, wobei das Bestimmen der Informationen, die sich auf das dritte Netzwerkelement beziehen, umfasst:
Bestimmen, basierend auf einer lokalen Richtlinie, eines dritten Netzwerkelements, das mindestens eine der erforderlichen DC-Medieninformationen oder die Informationen erfüllt, die sich auf die aktuelle Anrufanforderung beziehen; und Bestimmen der Informationen, die sich auf das dritte Netzwerkelement beziehen.

10. Verfahren nach Anspruch 8, wobei das Bestimmen der Informationen, die sich auf den Satz der dritten Netzwerkelemente beziehen, umfasst:
Bestimmen eines Satzes von dritten Netzwerkelementen, die mindestens eine der erforderlichen DC-Medieninformationen oder die Informationen erfüllen, die sich auf die aktuelle Anrufanforderung beziehen; und Bestimmen der Informationen, die sich auf den Satz der dritten Netzwerkelemente beziehen.

11. Verfahren nach einem der Ansprüche 8 bis 10, wobei das dritte Netzwerkelement eines ist von: einer DC-Medienfunktionalität, DCMF, einer DC-Medienfunktion, einer DC-Netzwerkfunktionsinstanz, einer DC-Mediennetzwerkfunktionsinstanz, einem DC-Dienst oder einem DC-Mediendienst.

12. Verfahren nach Anspruch 8, wobei
die erste Diensterkennungsanforderung eine ist von: einer DC-Medienfähigkeitserkennungsanforderung, einer DC-Medienerkennungsanforderung, einer DC-Mediendienstfähigkeitserkennungsanforderung, einer DC-Mediendiensterkennungsanforderung, einer DC-Dienstfähigkeitserkennungsanforderung, einer DC-Diensterkennungsanforderung oder einer DC-Netzwerkfunktionserkennungsanforderung,
und/oder
die erforderlichen DC-Medieninformationen mindestens eines umfassen von: einer DC-Medienfähigkeit, einem DC-Medium, einer DC-Mediendienstfähigkeit, einem DC-Mediendienst, einer DC-Dienstfähigkeit, einem DC-Dienst, einer DC-Netzwerkfunktion, einer DC-Fähigkeit, einer Schnittstellenfähigkeit, einer DC-Medienfähigkeitsliste, einer DC-Medienliste, einer DC-Mediendienstfähigkeitsliste, einer DC-Mediendienstliste, einer DC-Dienstfähigkeitsliste, einer DC-Dienstliste, einer DC-Netzwerkfunktionsliste, einer DC-Fähigkeitsliste oder einer Schnittstellenfähigkeitsliste.

13. Verfahren nach Anspruch 8, wobei die Informationen, die sich auf das dritte Netzwerkelement beziehen, oder die Informationen, die sich auf den Satz der dritten Netzwerkelemente beziehen, mindestens eines umfassen von: einer Identifikation, Adressinformationen, DC-Netzwerkfunktionstypinformationen, Dienstinstanzlisteninformationen, DC-Medienfunktionsinstanzinformationen, einer DC-Mediennetzwerkfunktion oder anderen Informationen, die sich auf einen DC-Mediendienst oder eine DC-Medienfähigkeit beziehen.

14. Einrichtung zum Verarbeiten von Informationen, umfassend:
eine erste Übertragungseinheit (151), die konfiguriert ist, um eine erste Diensterkennungsanforderung an ein zweites Netzwerkelement zu senden, die erste Diensterkennungsanforderung umfassend mindestens eines von erforderlichen Datenkanalmedieninformationen, DC-Medieninformationen, oder Informationen, die sich auf eine aktuelle Anrufanforderung beziehen;
eine erste Empfangseinheit (152), die konfiguriert ist, um eine erste Diensterkennungsantwort zu empfangen, die durch das zweite Netzwerkelement zurückgegeben wird, die erste Diensterkennungsantwort umfassend mindestens Informationen, die sich auf ein drittes Netzwerkelement beziehen, oder Informationen, die sich auf einen Satz von dritten Netzwerkelementen beziehen; und
eine erste Auswahleinheit, die konfiguriert ist, um das dritte Netzwerkelement basierend auf mindestens einem auszuwählen von: DC-Medienanforderungsinformationen, Schnittstellenanforderungsinformationen, die Informationen, die sich auf die aktuelle Anrufanforderung beziehen, Standortinformationen eines ersten Endgeräts, Internetprotokolladressinformationen, IP-Adressinformationen des ersten Endgeräts oder Informationen einer ausgewählten Medienfunktion.

15. Einrichtung zum Verarbeiten von Informationen, umfassend:
eine erste Empfangseinheit, die konfiguriert ist, um eine erste Diensterkennungsanforderung von einem ersten Netzwerkelement zu empfangen, die erste Diensterkennungsanforderung umfassend mindestens eine von erforderlichen Datenkanalmedieninformationen, DC-Medieninformationen, oder Informationen, die sich auf eine aktuelle Anrufanforderung beziehen;
eine erste Bestimmungseinheit (171), die konfiguriert ist, um Informationen, die sich auf ein drittes Netzwerkelement beziehen, oder Informationen zu bestimmen, die sich auf einen Satz von dritten Netzwerkelementen beziehen; und
eine dritte Übertragungseinheit (172), die konfiguriert ist, um eine erste Diensterkennungsantwort an das erste Netzwerkelement zu senden, die erste Diensterkennungsantwort umfassend mindestens die Informationen, die sich auf das dritte Netzwerkelement beziehen, oder die Informationen, die sich auf den Satz der dritten Netzwerkelemente beziehen, wobei die erste Diensterkennungsantwort zum Auswählen des dritten Netzwerkelements basierend auf mindestens einem verwendet wird von: DC-Medienanforderungsinformationen, Schnittstellenanforderungsinformationen, die Informationen, die sich auf die aktuelle Anrufanforderung beziehen, Standortinformationen eines ersten Endgeräts, Internetprotokolladressinformationen, IP-Adressinformationen des ersten Endgeräts oder Informationen einer ausgewählten Medienfunktion.

## Revendications

1. Procédé de traitement d'informations, appliqué à un premier élément de réseau, le procédé comprenant :
l'envoi (101) d'une première demande de découverte de service à un deuxième élément de réseau, la première demande de découverte de service comprenant au moins l'une parmi des informations multimédia de canal de données, DC, requises ou des informations relatives à une demande d'appel en cours ;
la réception (102) d'une première réponse de découverte de service renvoyée par le deuxième élément de réseau, la première réponse de découverte de service comprenant au moins des informations relatives à un troisième élément de réseau ou des informations relatives à un ensemble de troisièmes éléments de réseau ; et
la sélection du troisième élément de réseau sur la base d'au moins l'un parmi : des informations sur une exigence multimédia DC, des informations sur une exigence d'interface, des informations relatives à la demande d'appel en cours, des informations sur un emplacement d'un premier terminal, des informations sur une adresse du premier terminal de protocole internet, IP, ou des informations sur une fonction multimédia sélectionnée.

2. Procédé selon la revendication 1, dans lequel la première réponse de découverte de service transporte les informations relatives au troisième élément de réseau ou les informations relatives à l'ensemble des troisièmes éléments de réseau.

3. Procédé selon la revendication 1 ou 2, dans lequel le troisième élément de réseau est l'un parmi : une fonctionnalité multimédia DC, DCMF, une fonction multimédia DC, une instance de fonction de réseau DC, une instance de fonction de réseau multimédia DC, un service DC, ou un service multimédia DC.

4. Procédé selon la revendication 1, dans lequel le premier élément de réseau est l'un parmi : un serveur d'application, AS, une fonctionnalité de commande DC, DCSF, ou un élément de réseau de sous-système multimédia de protocole Internet, IMS.

5. Procédé selon la revendication 1, dans lequel la première demande de découverte de service est l'une parmi : une demande de découverte de capacité multimédia DC, une demande de découverte de multimédia DC, une demande de découverte de capacité de service multimédia DC, une demande de découverte de service DC, une demande de découverte de capacité de service DC, une demande de découverte de service DC ou une demande de découverte de fonction de réseau DC.

6. Procédé selon la revendication 1 ou 5, dans lequel les informations multimédia DC requises comprennent au moins l'un parmi : une capacité multimédia DC, un média DC, une capacité de service multimédia DC, un service multimédia DC, une capacité de service DC, un service DC, une fonction de réseau DC, une capacité DC, une capacité d'interface, une liste de capacités multimédia DC, une liste multimédia DC, une liste de capacités de services multimédia DC, une liste de services multimédia DC, une liste de capacités de services DC, une liste de services DC, une liste de fonctions de réseau DC, une liste de capacités DC, ou une liste de capacités d'interface.

7. Procédé selon la revendication 1, dans lequel les informations relatives au troisième élément de réseau ou les informations relatives à l'ensemble des troisièmes éléments de réseau comprennent au moins l'un parmi : une identification, des informations d'adresse, des informations sur le type de fonction de réseau DC, des informations sur la une liste d'instances de service, des informations sur une instance de fonction multimédia DC, une fonction de réseau multimédia DC ou d'autres informations relatives à un service ou une capacité multimédia DC.

8. Procédé de traitement d'informations, appliqué à un deuxième élément de réseau, le procédé comprenant :
la réception d'une première demande de découverte de service à partir d'un premier élément de réseau, la première demande de découverte de service comprenant au moins l'une parmi les informations multimédia de canal de données, DC, requises ou les informations relatives à une demande d'appel en cours ;
la détermination d'informations relatives à un troisième élément de réseau ou d'informations relatives à un ensemble de troisièmes éléments de réseau ; et
l'envoi d'une première réponse de découverte de service au premier élément de réseau, la première réponse de découverte de service comprenant au moins les informations relatives au troisième élément de réseau ou les informations relatives à l'ensemble des troisièmes éléments de réseau, dans lequel la première réponse de découverte de service est utilisée pour sélectionner le troisième élément de réseau sur la base d'au moins l'un parmi : des informations sur l'exigence multimédia DC, des informations sur l'exigence d'interface, des informations relatives à la demande d'appel en cours, des informations sur un emplacement d'un premier terminal, des informations sur une adresse de protocole Internet, IP, du premier terminal ou des informations sur une fonction multimédia sélectionnée.

9. Procédé selon la revendication 8, dans lequel la détermination des informations relatives au troisième élément de réseau comprend :
la détermination, sur la base d'une politique locale, d'un troisième élément de réseau qui satisfait à au moins l'une parmi les informations multimédias DC requises ou les informations relatives à la demande d'appel en cours ; et la détermination des informations relatives au troisième élément de réseau.

10. Procédé selon la revendication 8, dans lequel la détermination des informations relatives à l'ensemble des troisièmes éléments de réseau comprend :
la détermination d'un ensemble de troisièmes éléments de réseau qui satisfont à au moins l'une parmi les informations multimédias DC requises ou les informations relatives à la demande d'appel en cours ; et la détermination des informations relatives à l'ensemble des troisièmes éléments de réseau.

11. Procédé selon l'une quelconque des revendications 8 ou 10, dans lequel le troisième élément de réseau est l'un parmi : une fonctionnalité multimédia DC, DCMF, une fonction multimédia DC, une instance de fonction de réseau DC, une instance de fonction de réseau multimédia DC, un service DC, ou un service multimédia DC.

12. Procédé selon la revendication 8, dans lequel
la première demande de découverte de service est l'un parmi : une demande de découverte de capacité multimédia DC, une demande de découverte de multimédia DC, une demande de découverte de capacité de service multimédia DC, une demande de découverte de service DC, une demande de découverte de capacité de service DC, une demande de découverte de service DC ou une demande de découverte de fonction de réseau DC,
et/ou
les informations multimédia DC requises comprennent au moins l'un parmi : une capacité multimédia DC, un média DC, une capacité de service multimédia DC, un service multimédia DC, une capacité de service DC, un service DC, une fonction de réseau DC, une capacité DC, une capacité d'interface, une liste de capacités multimédia DC, une liste multimédia DC, une liste de capacités de services multimédia DC, une liste de services multimédia DC, une liste de capacités de services DC, une liste de services DC, une liste de fonctions de réseau DC, une liste de capacités DC, ou une liste de capacités d'interface.

13. Procédé selon la revendication 8, dans lequel les informations relatives au troisième élément de réseau ou les informations relatives à l'ensemble des troisièmes éléments de réseau comprennent au moins l'un parmi : une identification, des informations d'adresse, des informations sur un type de fonction de réseau DC, des informations sur une liste d'instances de service, des informations sur une instance de fonction multimédia DC, une fonction de réseau multimédia DC ou d'autres informations relatives à un service ou une capacité multimédia DC.

14. Appareil de traitement d'informations, comprenant :
une première unité de transmission (151), configurée pour envoyer une première demande de découverte de service à un second élément de réseau, la première demande de découverte de service comprenant au moins l'une parmi les informations multimédia de canal de données, DC, requises ou des informations relatives à une demande d'appel en cours ;
une première unité de réception (152), configurée pour recevoir une première réponse de découverte de service renvoyée par le deuxième élément de réseau, la première réponse de découverte de service comprenant au moins des informations relatives à un troisième élément de réseau ou des informations relatives à un ensemble de troisièmes éléments de réseau ; et
une première unité de sélection, configurée pour sélectionner le troisième élément de réseau sur la base d'au moins l'un parmi : des informations sur une exigence multimédia DC, des informations sur une exigence d'interface, des informations relatives à la demande d'appel en cours, des informations sur un emplacement d'un premier terminal, des informations sur l'adresse de protocole internet, **IP,** du premier terminal ou des informations sur une fonction multimédia sélectionnée.

15. Appareil de traitement d'informations, comprenant :
une première unité de réception, configurée pour recevoir une première demande de découverte de service à un premier élément de réseau, la première demande de découverte de service comprenant au moins l'une parmi des informations multimédia de canal de données, DC, requises ou les informations relatives à une demande d'appel en cours ;
une première unité de détermination (171), configurée pour déterminer des informations relatives à un troisième élément de réseau ou des informations relatives à un ensemble de troisièmes éléments de réseau ; et
une troisième unité de transmission (172), configurée pour envoyer une première réponse de découverte de service au premier élément de réseau, la première réponse de découverte de service comprenant au moins les informations relatives au troisième élément de réseau ou les informations relatives à l'ensemble des troisièmes éléments de réseau, dans lequel la première réponse de découverte de service est utilisée pour sélectionner le troisième élément de réseau sur la base d'au moins l'un parmi : des informations sur une exigence multimédia DC, des informations sur une exigence d'interface, des informations relatives à la demande d'appel en cours, des informations sur un emplacement d'un premier terminal, des informations sur l'adresse de protocole Internet, IP, du premier terminal ou des informations sur une fonction multimédia sélectionnée.
